# EUROPEAN PATENT APPLICATION

(11) **EP 2 506 584 A1**
(43) Date of publication of application: **03.10.2012**
(21) Application number: 11837849.6
(22) Date of filing: 14.10.2011
(51) Int. Cl.: H04N 13/04, H04N 7/025, H04N 7/03, H04N 7/035

(54) **THREE-DIMENSIONAL IMAGE DATA TRANSMITTING DEVICE, THREE-DIMENSIONAL IMAGE DATA TRANSMITTING METHOD, THREE-DIMENSIONAL IMAGE DATA RECEIVING DEVICE, AND THREE-DIMENSIONAL IMAGE DATA RECEIVING METHOD**

(30) Priority: 02.11.2010 JP 2010246538
(71) Applicant: Sony Corporation, Tokyo 108-0075 (JP)
(72) Inventor: TSUKAGOSHI, Ikuo, Tokyo 108-0075 (JP)
(74) Representative: Beder, Jens
(86) International application number: PCT/JP2011/073739
(87) International publication number: WO 2012/060198

(57) **Abstract**

[Object] To maintain perspective consistency with individual objects in an image when displaying captions (caption units) based on an ARIB method in a superimposed manner.

[Solution] Pieces of caption data of individual caption units are inserted as pieces of caption sentence data (caption codes) of a caption sentence data group into a caption data stream. A data unit of extended display control (data unit parameter = 0x4F) for transmitting display control information is newly defined. In a PES stream of a caption data group, disparity information is inserted into a data unit for transmitting display control information, thereby associating caption sentence data (caption sentence information) with disparity information. On the receiver side, appropriate disparity can be given to caption units that are to be superimposed on a left-eye image and a right-eye image.

## Description

### Technical Field

The present invention relates to a stereo image data transmitting apparatus, a stereo image data transmitting method, a stereo image data receiving apparatus, and a stereo image data receiving method, and particularly relates to a stereo image data transmitting apparatus and so forth capable of favorably performing display of superimposition information, such as captions.

### Background Art

For example, a method for transmitting stereo image data using television airwaves is suggested in PTL 1. In this case, stereo image data including left-eye image data and right-eye image data is transmitted, and stereo image display using binocular disparity is performed in a television receiver.

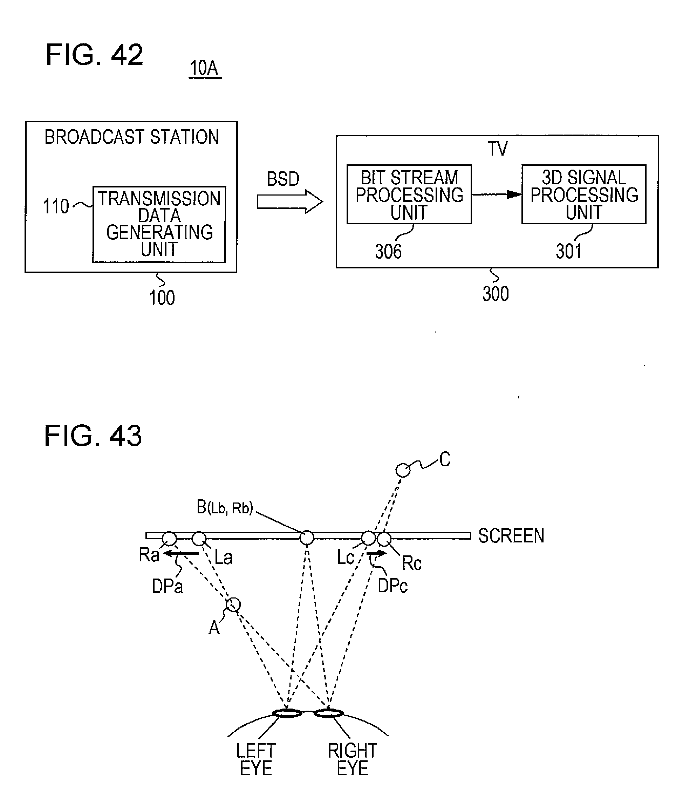

Fig. 43 illustrates a relationship between the display positions of left and right images of an object on a screen and the reproduction position of the stereo image formed therefrom in stereo image display using binocular disparity. For example, regarding an object A, a left image La of which is displayed so as to be shifted to the right side and a right image Ra of which is displayed so as to be shifted to the left side on the screen, as illustrated in the figure, left and right lines of sight cross in front of a screen surface, and thus the reproduction position of the stereo image thereof is in front of the screen surface. DPa represents a disparity vector in the horizontal direction regarding the object A.

Also, for example, regarding an object B, a left image Lb and a right image Rb of which are displayed at the same position on the screen, as illustrated in the figure, left and right lines of sight cross on the screen surface, and thus the reproduction position of the stereo image thereof is on the screen surface. Furthermore, for example, regarding an object C, a left image Lc of which is displayed so as to be shifted to the left side and a right image Rc of which is displayed so as to be shifted to the right side on the screen, as illustrated in the figure, left and right lines of sight cross behind the screen surface, and thus the reproduction position of the stereo image thereof is behind the screen surface. DPc represents a disparity vector in the horizontal direction regarding the object C.

### Citation List

### Patent Literature

PTL 1: Japanese Unexamined Patent Application Publication No. 2005-6114

### Summary of Invention

### Technical Problem

As described above, in stereo image display, a viewer normally recognizes perspective in a stereo image using binocular disparity. Regarding superimposition information that is to be superimposed on an image, such as captions, for example, it is expected to be rendered in conjunction with stereo image display not only in a two-dimensional space but also in three-dimensional perspective.

For example, in the case of performing superimposition display (overlay display) of a caption on an image, a viewer may feel perspective inconsistency unless the caption is displayed in front of the nearest object in the image in terms of perspective. Also, in the case of performing superimposition display of other graphics information or text information on an image, it is expected that disparity adjustment is to be performed in accordance with the perspective of individual objects in the image and perspective consistency is to be maintained.

An object of the present invention is to maintain perspective consistency with individual objects in an image in display of superimposition information, such as captions. Also, an object of the present invention is to easily transmit disparity information in association with superimposition information in an Association of Radio Industries and Businesses (ARIB) method, for example. Solution to Problem

A concept of the present invention resides in a stereo image data transmitting apparatus including:
an image data output unit that outputs stereo image data including left-eye image data and right-eye image data;
a superimposition information data output unit that outputs data of superimposition information that is to be superimposed on images that are based on the left-eye image data and the right-eye image data;
a disparity information output unit that outputs disparity information for giving disparity by shifting the superimposition information that is to be superimposed on the images that are based on the left-eye image data and the right-eye image data; and
a data transmitting unit that transmits a multiplexed data stream including a first data stream and a second data stream, the first data stream including the stereo image data output from the image data output unit, the second data stream including the data of the superimposition information output from the superimposition information data output unit and the disparity information output from the disparity information output unit,
wherein the second data stream includes a data unit for transmitting display control information about the superimposition information, and
wherein the data unit includes the disparity information inserted thereinto.

In the present invention, the image data output unit outputs stereo image data including left-eye image data and right-eye image data. Also, the superimposition information data output unit outputs data of superimposition information that is to be superimposed on images that are based on the left-eye image data and the right-eye image data. Here, the superimposition information means information superimposed on an image, such as captions. Also, the disparity information output unit outputs disparity information for giving disparity by shifting the superimposition information that is to be superimposed on the images that are based on the left-eye image data and the right-eye image data.

Also, the data transmitting unit transmits a multiplexed data stream including a first data stream and a second data stream. The first data stream includes the stereo image data output from the image data output unit. The second data stream includes the data of the superimposition information output from the superimposition information data output unit and the disparity information output from the disparity information output unit.

The second data stream includes a data unit for transmitting display control information about the superimposition information. The disparity information is inserted into the data unit. For example, the data of the superimposition information is caption sentence data based on an ARIB method. The data unit into which the disparity information is inserted is a data unit in a caption sentence data group. For example, the disparity information inserted into the data unit is distinguished from other display control information on the basis of type information. For example, the disparity information inserted into the data unit is disparity information corresponding to specific superimposition information displayed on the same screen, or disparity information corresponding to a plurality of pieces of superimposition information displayed on the same screen.

In this way, in the present invention, disparity information is inserted into the data unit for transmitting display control information about the superimposition information included in the second data stream, so that the superimposition information is associated with the disparity information. Thus, on the receiver side, appropriate disparity can be given to the superimposition information superimposed on a left-eye image and a right-eye image using the corresponding disparity information. Accordingly, the perspective consistency with individual objects in an image can be maintained in the optimum state when displaying superimposition information, such as captions.

In the present invention, for example, note that the disparity information includes first disparity information or includes the first disparity information and second disparity information. The first disparity information is used in common in a certain number of frame periods in which the superimposition information is displayed. The second disparity information is sequentially updated in the certain number of frame periods. The data unit may include flag information inserted thereinto, the flag information indicating existence of the second disparity information. In this case, only the first disparity information may be transmitted, or the first disparity information and the second disparity information may be transmitted. By transmitting the second disparity information, disparity given to the superimposition information can be dynamically changed in accordance with changes in content of images on the receiver side.

Also, in the present invention, for example, the second disparity information may include disparity information about an initial frame in the certain number of frame periods and disparity information about subsequent frames in each of update frame intervals. In this case, the update frame intervals are optionally set. For example, if disparity information largely changes in the time direction (frame direction), the change in the time direction of the disparity information can be transmitted to the receiver side more correctly by decreasing the update frame intervals. Also, for example, if disparity information moderately changes in the time direction, the data amount of disparity information can be suppressed by increasing the update frame intervals.

Also, in the present invention, for example, the second disparity information may include flag information added thereto for individual frames in each of the update frame intervals, the flag information indicating whether or not the disparity information is updated. In this case, if a period in which change in the time direction of disparity information is small continues, transmission of disparity information in that period can be omitted using the flag information, so that the data mount of disparity information can be suppressed.

Also, in the present invention, for example, the second disparity information may include information added thereto for individual frames in each of the update frame intervals, the information adjusting the update frame intervals. In this case, the update frame intervals can be optionally adjusted in a shorter direction or a longer direction on the basis of the adjustment information, so that change in the time direction can be transmitted to the receiver side more properly.

Also, in the present invention, for example, the data unit which is for transmitting display control information and into which disparity information is inserted may include information inserted thereinto, the information specifying a frame period. Accordingly, the update frame intervals of disparity information intended on the transmitter side can be correctly transmitted to the receiver side. If the information is not added, the receiver side refers to the frame period of video, for example.

Also, in the present invention, for example, the data unit which is for transmitting display control information and into which disparity information is inserted may include information inserted thereinto, the information indicating a correspondence level for disparity information necessary for displaying superimposition information. In this case, the information enables control of correspondence with disparity information on the receiver side.

Also, in the present invention, for example, the second data stream may include, in an upper layer of the data unit, flag information indicating whether the second data stream is compatible with extended display of the superimposition information. In this case, the flag information enables the receiver side to easily recognize whether or not the second data stream is compatible with extended display of superimposition information, for example, 3D display.

Also, in the present invention, for example, the multiplexed data stream may include flag information inserted thereinto, the flag information indicating whether the second data stream is compatible with extended display control of the superimposition information. In this case, the receiver side can easily recognize whether or not the second data stream is compatible with extended display control of superimposition information without opening data in the second data stream.

For example, the multiplexed stream includes an event information table serving as service information for performing management in units of events. The flag information is inserted into a lower layer of the event information table. Also, for example, the multiplexed data stream includes a program map table serving as program specific information that indicates programs to which individual elementary streams included in the multiplexed data stream belong. The flag information is inserted into a lower layer of the program map table.

Another concept of the present invention resides in a stereo image data receiving apparatus including:
a data receiving unit that receives a multiplexed data stream including a first data stream and a second data stream,
the first data stream including stereo image data including left-eye image data and right-eye image data for displaying a stereo image,
the second data stream including data of superimposition information that is to be superimposed on images that are based on the left-eye image data and the right-eye image data and disparity information for giving disparity by shifting the superimposition information that is to be superimposed on the images that are based on the left-eye image data and the right-eye image data,
the second data stream including a data unit for transmitting display control information about the superimposition information, the disparity information being inserted into the data unit;
an image data obtaining unit that obtains the stereo image data from the first data stream included in the multiplexed data stream received by the data receiving unit;
a superimposition information data obtaining unit that obtains the data of the superimposition information from the second data stream included in the multiplexed data stream received by the data receiving unit;
a disparity information obtaining unit that obtains the disparity information from the second data stream included in the multiplexed data stream received by the data receiving unit; and
an image data processing unit that gives disparity to the same superimposition information that is to be superimposed on a left-eye image and a right-eye image using the left-eye image data and the right-eye image data included in the stereo image data obtained by the image data obtaining unit, the disparity information obtained by the disparity information obtaining unit, and the data of the superimposition information obtained by the superimposition information data obtaining unit, thereby obtaining data of the left-eye image on which the superimposition information is superimposed and data of the right-eye image on which the superimposition information is superimposed.

In the present invention, the data receiving unit receives a multiplexed data stream including a first data stream and a second data stream. The first data stream includes stereo image data including left-eye image data and right-eye image data for displaying a stereo image. Also, the second data stream includes data of superimposition information that is to be superimposed on images that are based on the left-eye image data and the right-eye image data and disparity information for giving disparity by shifting the superimposition information that is to be superimposed on the images that are based on the left-eye image data and the right-eye image data.

The second data stream includes a data unit for transmitting display control information about the superimposition information. The disparity information is inserted into the data unit. For example, the data of the superimposition information is caption sentence data based on the ARIB method. The data unit into which the disparity information is inserted is a data unit in a caption sentence data group. For example, the disparity information inserted into the data unit is distinguished from other display control information on the basis of type information.

The image data obtaining unit obtains stereo image data from the first data stream included in the multiplexed data stream received by the data receiving unit. Also, the superimposition information data obtaining unit obtains data of superimposition information from the second data stream included in the multiplexed data stream received by the data receiving unit. Also, the disparity information obtaining unit obtains disparity information from the second data stream included in the multiplexed data stream received by the data receiving unit.

In addition, the image data processing unit gives disparity to the same superimposition information that is to be superimposed on a left-eye image and a right-eye image using the left-eye image data, the right-eye image data, the data of the superimposition information, and the disparity information. Accordingly, data of the left-eye image on which superimposition information is superimposed and data of the right-eye image on which superimposition information is superimposed are obtained.

In this way, in the present invention, disparity information is inserted into a data unit which is for transmitting display control information about superimposition information and which is included in the second data stream including the superimposition information, whereby the superimposition information is associated with the disparity information. Thus, the image data processing unit can give appropriate disparity to the superimposition information that is to be superimposed on a left-eye image and a right-eye image using the corresponding disparity information. Accordingly, the perspective consistency with individual objects in an image can be maintained in the optimum state when displaying superimposition information, such as captions.

Also, in the present invention, for example, the disparity information inserted into the data unit may be disparity information that is sequentially updated in the certain number of frame periods in which superimposition information is displayed, and may include disparity information about an initial frame in the certain number of frame periods and disparity information about subsequent frames in each of update frame intervals. In this case, the disparity given to the superimposition information can be dynamically changed in accordance with changes in content of images.

Also, in the present invention, for example, the image data processing unit may perform an interpolation process on disparity information about a plurality of frames included in the disparity information that is sequentially updated in the certain number of frame periods, thereby generating and using disparity information for an optional frame interval in the certain number of frame periods. In this case, even if disparity information is transmitted at update frame intervals from the transmitter side, the disparity given to the superimposition information can be controlled at short intervals, for example, in units of frames.

In this case, the interpolation process may be a linear interpolation process, for example, may include a low-pass filter process in a time direction (frame direction). Accordingly, even if disparity information is transmitted at update frame intervals from the transmitter side, change in the time direction of disparity information after the interpolation process can be made moderate, and unnaturalness caused by discontinuous transition of disparity given to the superimposition information at update frame intervals can be suppressed.

### Advantageous Effects of Invention

According to the present invention, disparity information is inserted into a data unit that is for transmitting display control information about superimposition information and that is included in a second data stream including the superimposition information, whereby the superimposition information is associated with the disparity information. Thus, on the receiver side, appropriate disparity can be given to the superimposition information that is to be superimposed on a left-eye image and a right-eye image using the corresponding disparity information. Accordingly, the perspective consistency with individual objects in an image can be maintained in the optimum state when displaying superimposition information, such as captions.

### Brief Description of Drawings

[Fig. 1] Fig. 1 is a block diagram illustrating an example configuration of a stereo image display system according to an embodiment of the present invention.
[Fig. 2] Fig. 2 is a block diagram illustrating an example configuration of a transmission data generating unit in a broadcast station.
[Fig. 3] Fig. 3 is a diagram illustrating image data of a pixel format of 1920 x 1080 pixels.
[Fig. 4] Fig. 4 includes diagrams describing a "Top & Bottom" method, a "Side By Side" method, and a "Frame Sequential" method, which are methods for transmitting stereo image data (3D image data).
[Fig. 5] Fig. 5 is a diagram describing an example of detecting disparity vectors of a right-eye image with respect to a left-eye image.
[Fig. 6] Fig. 6 is a diagram describing obtaining a disparity vector using a block matching method.
[Fig. 7] Fig. 7 includes diagrams illustrating an example configuration of a caption data stream and an example display of caption units (captions).
[Fig. 8] Fig. 8 is a diagram illustrating an example image in a case where the values of disparity vectors of respective pixels are used as luminance values of the respective pixels.
[Fig. 9] Fig. 9 is a diagram illustrating an example of disparity vectors of respective blocks.
[Fig. 10] Fig. 10 includes diagrams describing a downsizing process that is performed by a disparity information creating unit of the transmission data generating unit.
[Fig. 11] Fig. 11 includes diagrams illustrating an example configuration of a caption data stream generated by a caption encoder and an example of creating disparity vectors in that case.
[Fig. 12] Fig. 12 includes diagrams illustrating another example configuration of a caption data stream generated by the caption encoder and an example of creating disparity vectors in that case.
[Fig. 13] Fig. 13 includes diagrams describing the case of shifting the positions of respective caption units superimposed on first and second views.
[Fig. 14] Fig. 14 is a diagram illustrating a packet structure of caption codes included in a PES stream in a caption sentence data group.
[Fig. 15] Fig. 15 is a diagram illustrating a packet structure of control codes included in a PES stream in a caption management data group.
[Fig. 16] Fig. 16 is a diagram illustrating a structure of a data group in a caption data stream (PES stream) based on an ARIB method.
[Fig. 17] Fig. 17 is a diagram schematically illustrating a structure of caption sentence data (caption_data) serving as "data_group_data_byte" in a data group structure in the case of a caption sentence data group.
[Fig. 18] Fig. 18 is a diagram schematically illustrating a structure of caption management data (caption_management_data) serving as "data_group_data_byte" in a data group structure in the case of a caption management data group.
[Fig. 19] Fig. 19 is a diagram illustrating a structure of a data unit (data_unit) included in a caption data stream.
[Fig. 20] Fig. 20 is a diagram illustrating the types of data unit, data unit parameters, and functions.
[Fig. 21] Fig. 21 is a diagram illustrating a syntax of a newly defined data unit (data_unit) of extended display control.
[Fig. 22] Fig. 22 is a diagram illustrating a syntax of a newly defined data unit (data_unit) of extended display control.
[Fig. 23] Fig. 23 is a diagram illustrating a syntax of "disparity_information" in "Advanced_Rendering_Control".
[Fig. 24] Fig. 24 is a diagram illustrating a syntax of "disparity_temporal_extension" in "disparity_information".
[Fig. 25] Fig. 25 is a diagram illustrating main data specification content in the syntax of "Advanced_Rendering_Control" and "disparity_information".
[Fig. 26] Fig. 26 is a diagram illustrating main data specification content in the syntax of "Advanced_Rendering_Control" and "disparity_information".
[Fig. 27] Fig. 27 is a diagram illustrating an example of updating disparity information in each base segment period (BSP) in a caption display period.
[Fig. 28] Fig. 28 is a diagram illustrating an example of updating disparity information in each base segment period (BSP) in a caption display period.
[Fig. 29] Fig. 29 is a diagram illustrating another syntax of "disparity_information" in "Advanced_Rendering_Control".
[Fig. 30] Fig. 30 is a diagram illustrating an example configuration of a transport stream (multiplexed data stream) including a video elementary stream, an audio elementary stream, and a caption elementary stream.
[Fig. 31] Fig. 31 is a diagram illustrating an example syntax of a data content descriptor inserted into a lower layer of an EIT.
[Fig. 32] Fig. 32 includes diagrams illustrating an example syntax of "arib_caption_info" included in a data content descriptor.
[Fig. 33] Fig. 33 is a diagram illustrating another configuration example of a transport stream (multiplexed data stream) including a video elementary stream, an audio elementary stream, and a caption elementary stream.
[Fig. 34] Fig. 34 is a diagram illustrating an example syntax of a data coding method descriptor inserted into a lower layer of a PMT.
[Fig. 35] Fig. 35 is a diagram illustrating an example syntax of "additional_arib_caption_info" included in a data coding method descriptor.
[Fig. 36] Fig. 36 includes diagrams illustrating an example display of a caption (graphics information) on an image and the perspective of a background, a foreground object, and the caption.
[Fig. 37] Fig. 37 includes diagrams illustrating an example display of a caption on an image, and a left-eye caption LGI and a right-eye caption RGI for displaying a caption.
[Fig. 38] Fig. 38 is a block diagram illustrating an example configuration of a set top box forming the stereo image display system.
[Fig. 39] Fig. 39 is a block diagram illustrating an example configuration of a bit stream processing unit forming the set top box.
[Fig. 40] Fig. 40 is a diagram illustrating an example of generating disparity information (interpolation disparity information) for an optional frame interval by performing an interpolation process including a low-pass filter process on disparity information about a plurality of frames forming disparity information that is sequentially updated in a caption display period.
[Fig. 41] Fig. 41 is a block diagram illustrating an example configuration of a television receiver forming the stereo image display system.
[Fig. 42] Fig. 42 is a block diagram illustrating another example configuration of the stereo image display system.
[Fig. 43] Fig. 43 is a diagram describing a relationship between the display positions of left and right images of an object on a screen and the reproduction position of the stereo image thereof in stereo image display using binocular disparity.

### Description of Embodiments

Hereinafter, a mode for carrying out the present invention (hereinafter referred to as an "embodiment") will be described. The description will be given in the following order.
1. Embodiment
2. Modification

### <1. Embodiment>

### [Example configuration of stereo image display system]

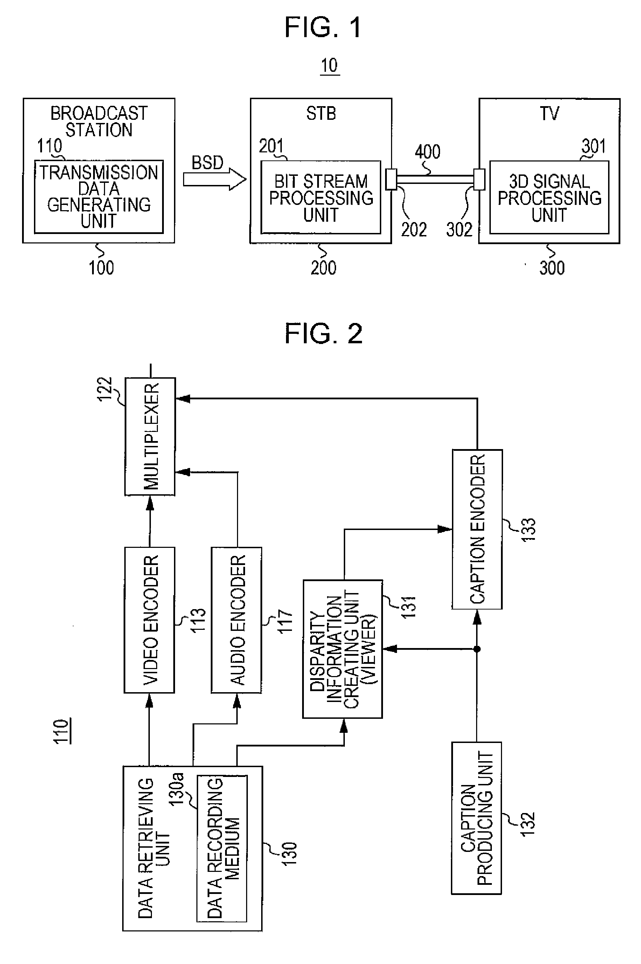

Fig. 1 illustrates an example configuration of a stereo image display system 10 according to the embodiment. The stereo image display system 10 includes a broadcast station 100, a set top box (STB) 200, and a television receiver (TV) 300.

The set top box 200 and the television receiver 300 are connected to each other via a high definition multimedia interface (HDMI) cable 400. The set top box 200 is provided with an HDMI terminal 202. The television receiver 300 is provided with an HDMI terminal 302. One end of the HDMI cable 400 is connected to the HDMI terminal 202 of the set top box 200, and the other end of the HDMI cable 400 is connected to the HDMI terminal 302 of the television receiver 300.

### [Description of broadcast station]

The broadcast station 100 transmits bit stream data BSD using airwaves. The broadcast station 100 includes a transmission data generating unit 110 that generates bit stream data BSD. The bit stream data BSD includes stereo image data including left-eye image data and right-eye image data, audio data, data of superimposition information, and furthermore disparity information (disparity vectors), etc. The superimposition information may be graphics information, text information, or the like. In this embodiment, the superimposition information includes captions.

### [Example configuration of transmission data generating unit]

Fig. 2 illustrates an example configuration of the transmission data generating unit 110 in the broadcast station 100. The transmission data generating unit 110 transmits disparity information (disparity vectors) with a data structure that can be easily compatible with Association of Radio Industries and Businesses (ARIB), which is one of existing broadcasting standards. The transmission data generating unit 110 includes a data retrieving unit (archive unit) 130, a disparity information creating unit 131, a video encoder 113, an audio encoder 117, a caption producing unit 132, a caption encoder 133, and a multiplexer 122.

A data recording medium 130a is loaded to the data retrieving unit 130 in a removable manner, for example. Audio data and disparity information are recorded in association with each other on the data recording medium 130a, together with stereo image data including left-eye image data and right-eye image data. The data retrieving unit 130 retrieves stereo image data, audio data, disparity information, etc., from the data recording medium 130a, and outputs them. The data recording medium 130a is a disc-shaped recording medium, a semiconductor memory, or the like.

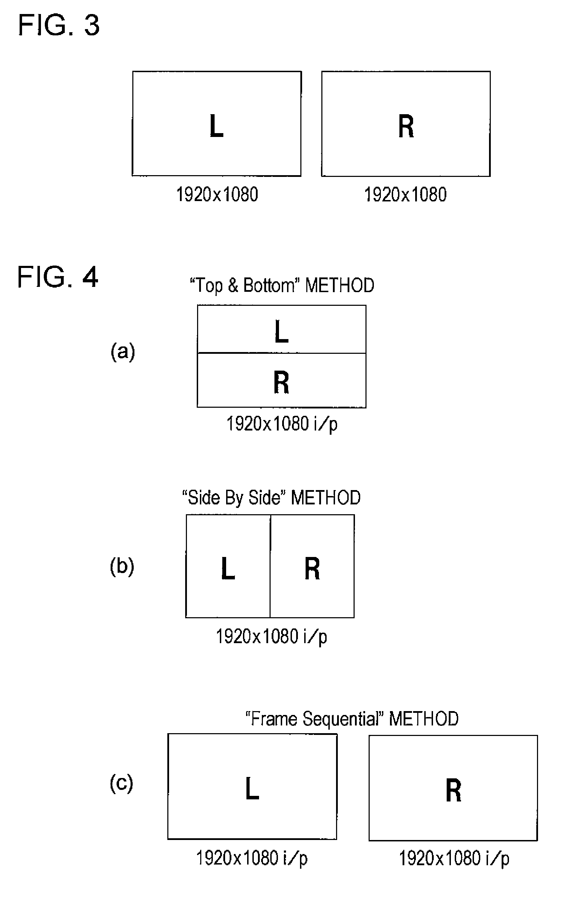

The stereo image data recorded on the data recording medium 130a is stereo image data based on a certain transmission method. An example of a method for transmitting stereo image data (3D image data) will be described. Here, the following first to third transmission methods are suggested, but another transmission method may be used instead. Also, a description will be given here of a case where each of image data of a left eye (L) and image data of a right eye (R) is image data of a determined resolution, for example, of a pixel format of 1920 x 1080 pixels, as illustrated in Fig. 3.

The first transmission method is a "Top & Bottom" method, that is, a method for transmitting data of each line of left-eye image data from a first half in the vertical direction, and transmitting data of each line of left-eye image data from a latter half in the vertical direction, as illustrated in Fig. 4(a). In this case, the lines of the left-eye image data and right-eye image data are thinned to one half, so that the vertical resolution is reduced to half that of the original signal.

The second transmission method is a "Side By Side" method, that is, a method for transmitting pixel data of left-eye image data from a first half in the horizontal direction, and transmitting pixel data of right-eye image data from a latter half in the horizontal direction, as illustrated in Fig. 4(b). In this case, in each of the left-eye image data and right-eye image data, the pixel data in the horizontal direction is thinned to one half. The horizontal resolution is reduced to half that of the original signal.

The third transmission method is a "Frame Sequential" method, that is, a method for transmitting left-eye image data and right-eye image data by sequentially switching therebetween for each frame, as illustrated in Fig. 4(c). The "Frame Sequential" method may be referred to as a "Full Frame" method or a "Backward Compatible" method.

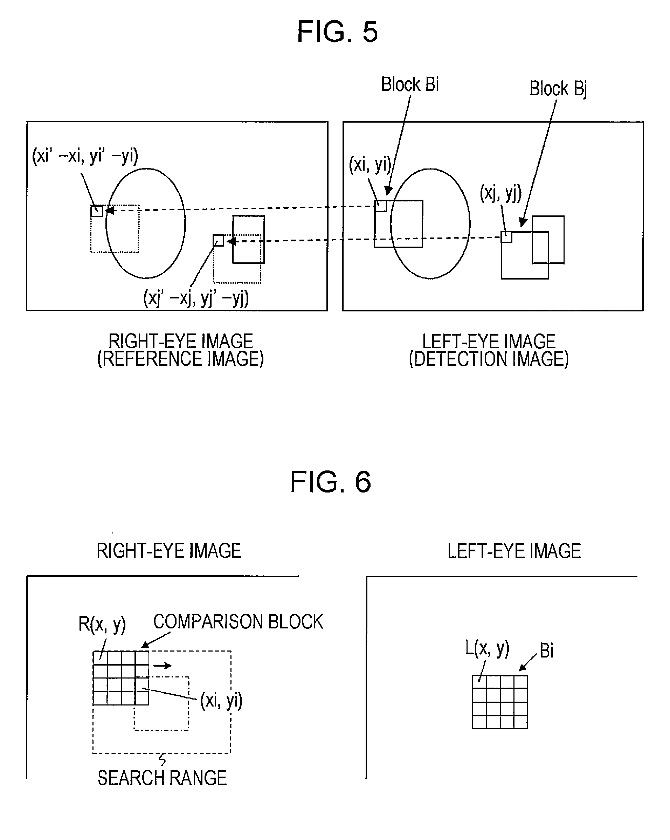

The disparity information recorded on the data recording medium 130a includes disparity vectors of respective pixels forming an image, for example. An example of detecting disparity vectors will be described. Here, an example of detecting disparity vectors of a right-eye image with respect to a left-eye image will be described. As illustrated in Fig. 5, the left-eye image is regarded as a detection image, and the right-eye image is regarded as a reference image. In this example, the disparity vectors at the positions (xi, yi) and (xj, yj) are detected.

The case of detecting a disparity vector at the position (xi, yi) will be described as an example. In this case, a pixel block (disparity detection block) Bi of 4 x 4, 8 x 8, or 16 x 16, for example, with the pixel at the position (xi, yi) being at the top-left, is set in the left-eye image. Then, a pixel block that matches the pixel block Bi is searched for in the right-eye image.

In this case, a search range having the position (xi, yi) at the center is set in the right-eye image, and comparison blocks of 4 x 4, 8 x 8, or 16 x 16, for example, similar to the above-described pixel block Bi, are sequentially set by sequentially regarding the individual pixels in the search range as a target pixel.

The sums of absolute values of differences between pixels corresponding to each other are obtained between the pixel block Bi and the comparison blocks that are sequentially set. Here, as illustrated in Fig. 6, when the pixel value of the pixel block Bi is L(x, y) and the pixel value of the comparison block is R(x, y), the sum of absolute values of differences between the pixel block Bi and a certain comparison block is expressed by Σ|IL(x, y) - R(x, y)|.

When n pixels are included in the search range that is set in the right-eye image, n sums S1 to Sn are eventually obtained, and a minimum sum Smin is selected from among them. Then, the position (xi', yi') of the pixel at the top-left is obtained from the comparison block from which the sum Smin is obtained. Accordingly, the disparity vector at the position (xi, yi) is detected as (xi'-xi, yi'-yi). Although a detailed description is omitted, the disparity vector at the position (xj, yj) is also detected in a similar process procedure, with a pixel block Bj of 4 x 4, 8 x 8, or 16 x 16, for example, being set with the pixel at the position (xj, yj) being at the top-left in the left-eye image.

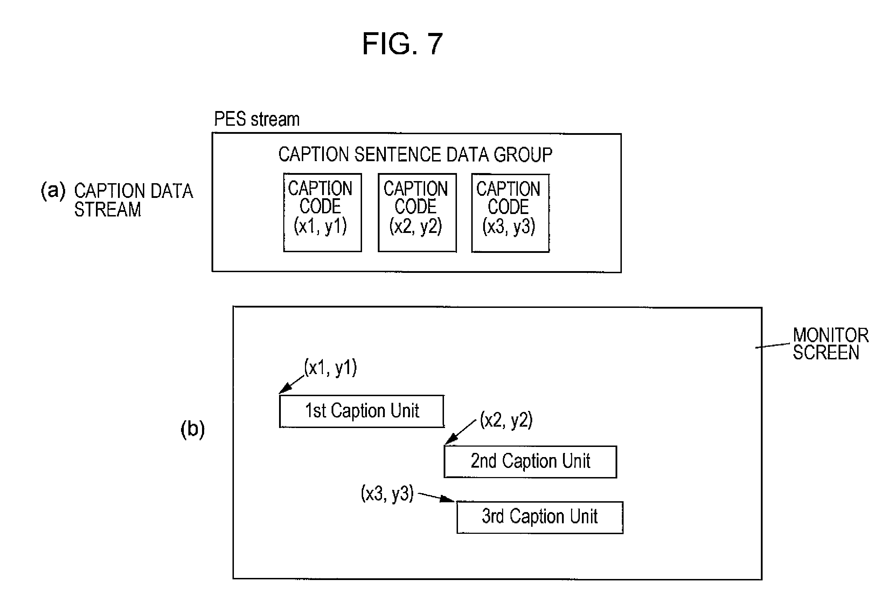

Referring back to Fig. 2, the caption producing unit 132 produces caption data (caption sentence data based on the ARIB method). The caption encoder 133 generates a caption data stream (caption elementary stream) including the caption data produced by the caption producing unit 132. Fig. 7(a) illustrates an example configuration of the caption data stream. In this example, as illustrated in Fig. 7(b), three caption units (captions) "1st Caption Unit", "2nd Caption Unit", and "3rd Caption Unit" are displayed on the same screen.

The pieces of caption data of the respective caption units are inserted as pieces of caption sentence data (caption codes) of a caption sentence data group into the caption data stream. Also, the setting data about a display area of each caption unit is inserted as data of a caption management data group into the caption data stream, although not illustrated. The display areas of the caption units "1st Caption Unit", "2nd Caption Unit", and "3rd Caption Unit" are represented by (x1, y1), (x2, y2), and (x3, y3), respectively.

The disparity information creating unit 131 has a viewer function. The disparity information creating unit 131 performs a downsizing process on the disparity information output from the data retrieving unit 130, that is, the disparity vectors of respective pixels, thereby generating a disparity vector belonging to a certain area.

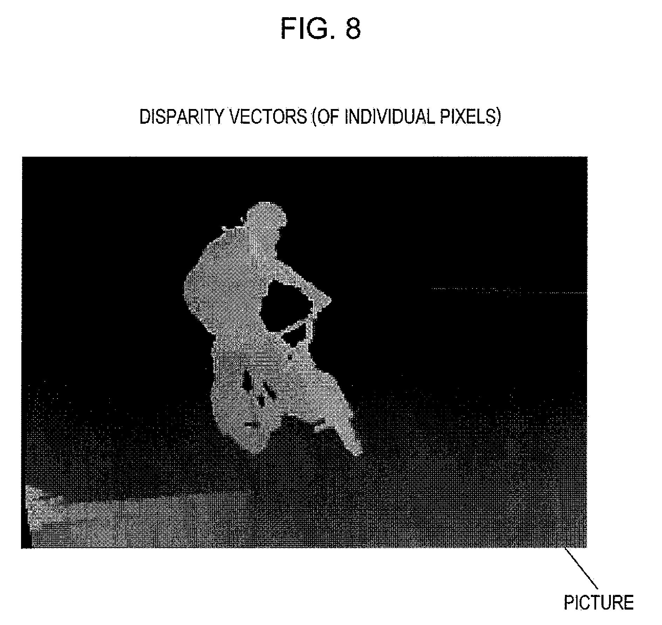

Fig. 8 illustrates an example of data in a relative depth direction that is given as the luminance values of respective pixels. Here, the data in the relative depth direction can be handled as disparity vectors of respective pixels by using certain conversion. In this example, the luminance value is large in the portion of the person. This means that the value of a disparity vector is large in the portion of the person, and thus means that the portion of the person is perceived as being popped up in stereo image display. Also, in this example, the luminance value is small in the portion of the background. This means that the value of a disparity vector is small in the portion of the background, and thus means that the portion of the background is perceived as being on the back side in stereo image display.

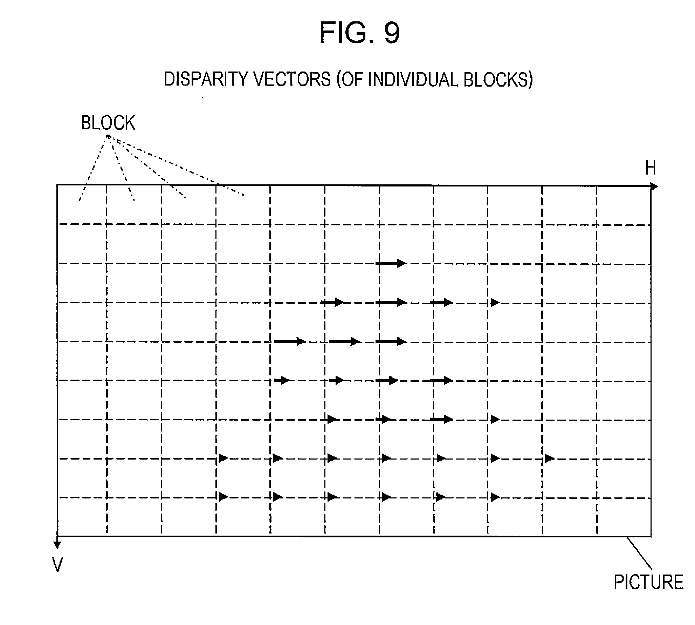

Fig. 9 illustrates an example of disparity vectors of respective blocks. The blocks are in the upper layer of pixels positioned in the bottom layer. These blocks are formed by dividing an image (picture) area into areas of a certain size in the horizontal direction and the vertical direction. The disparity vector of each block is obtained by selecting the disparity vector of the largest value from among the disparity vectors of all the pixels existing in the block, for example. In this example, the disparity vector of each block is represented by an arrow, and the length of the arrow corresponds to the size of the disparity vector.

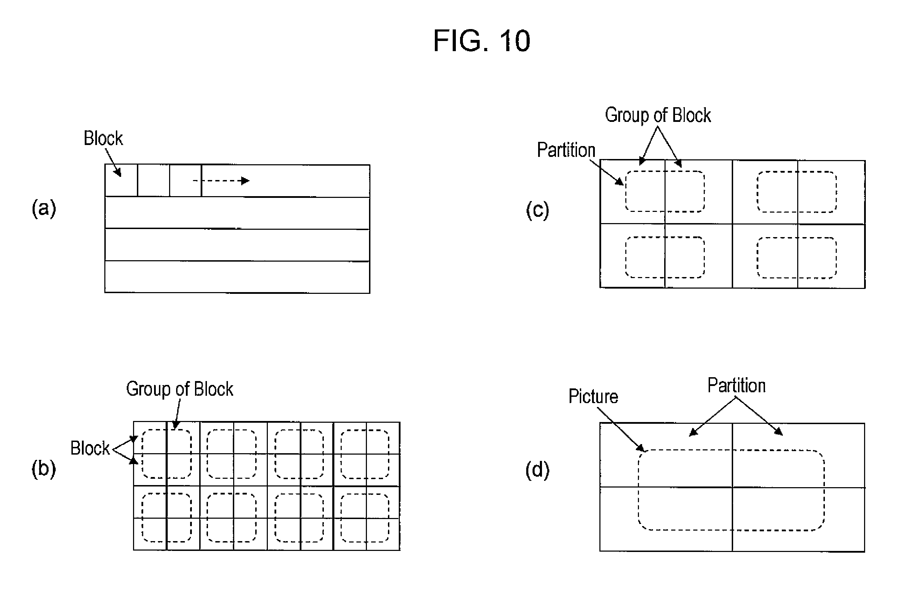

Fig. 10 illustrates an example of a downsizing process that is performed in the disparity information creating unit 131. First, the disparity information creating unit 131 obtains the disparity vectors of the respective blocks using the disparity vectors of the respective pixels, as illustrated in Fig. 10(a). As described above, the blocks are in the upper layer of pixels positioned in the bottom layer and are formed by dividing an image (picture) area into areas of a certain size in the horizontal direction and the vertical direction. Also, the disparity vector of each block is obtained by selecting the disparity vector of the largest value from among the disparity vectors of all the pixels existing in the block, for example.

Next, the disparity information creating unit 131 obtains the disparity vectors of respective groups (Groups Of Blocks) using the disparity vectors of the respective blocks, as illustrated in Fig. 10(b). The groups are in the upper layer of blocks and are obtained by grouping a plurality of blocks close to each other. In the example in Fig. 10(b), each group is constituted by four blocks defined by a broken-line frame. Also, the disparity vector of each group is obtained by selecting the disparity vector of the largest value from among the disparity vectors of all the blocks existing in the group, for example.

Next, the disparity information creating unit 131 obtains the disparity vectors of respective partitions using the disparity vectors of the respective groups, as illustrated in Fig. 10(c). The partitions are in the upper layer of groups and are obtained by grouping a plurality of groups close to each other. In the example in Fig. 10(c), each partition is constituted by two groups defined by a broken-line frame. Also, the disparity vector of each partition is obtained by selecting the disparity vector of the largest value from among the disparity vectors of all the groups existing in the partition, for example.

Next, the disparity information creating unit 131 obtains the disparity vector of the entire picture (entire image) positioned in the top layer using the disparity vectors of the respective partitions, as illustrated in Fig. 10(d). In the example in Fig. 10(d), four partitions defined by a broken-line frame are included in the entire picture. Also, the disparity vector of the entire picture is obtained by selecting the disparity vector of the largest value from among the disparity vectors of all the partitions included in the entire picture, for example.

In this way, the disparity information creating unit 131 performs a downsizing process on the disparity vectors of the respective pixels positioned in the bottom layer, thereby being able to obtain the disparity vectors of the respective areas in the individual layers, that is, blocks, groups, partitions, and an entire picture. Note that, in the example of a downsizing process illustrated in Fig. 10, the disparity vectors in four layers, that is, blocks, groups, partitions, and an entire picture, are eventually obtained in addition to the layer of pixels. However, the number of layers, the method for dividing an area in each layer, and the number of areas are not limited thereto.

The disparity information creating unit 131 creates disparity vectors corresponding to a certain number of caption units (captions) that are to be displayed on the same screen through the above-described downsizing process. In this case, the disparity information creating unit 131 creates the disparity vectors of the respective caption units (individual disparity vectors) or creates a disparity vector common to the individual caption units (common disparity vector). The selection is performed depending on the setting made by a user, for example.

In the case of creating individual disparity vectors, the disparity information creating unit 131 obtains disparity vectors belonging to the display areas of the respective caption units on the basis of the display areas by performing the above-described downsizing process. Also, in the case of creating a common disparity vector, the disparity information creating unit 131 obtains the disparity vector of the entire picture (entire image) by performing the above-described downsizing process (see Fig. 10(d)). In the case of creating a common disparity vector, the disparity information creating unit 131 may obtain the disparity vectors belonging to the display areas of the respective caption units and select the disparity vector of the largest value.

The caption encoder 133 causes the disparity vectors (disparity information) created by the disparity information creating unit 131 in the above-described manner to be included in a caption data stream. In this case, the pieces of caption data of the respective caption units that are to be displayed on the same screen are inserted as pieces of caption sentence data (caption codes) into a PES stream of a caption sentence data group in a caption data stream. Also, in this caption data stream, disparity vectors (disparity information) are inserted as display control information for captions into the PES stream of the caption sentence data group.

Now, a description will be given of a case where individual disparity vectors are created by the disparity information creating unit 131. Here, assume that three caption units (captions) "1st Caption Unit", "2nd Caption Unit", and "3rd Caption unit" are displayed on the same screen.

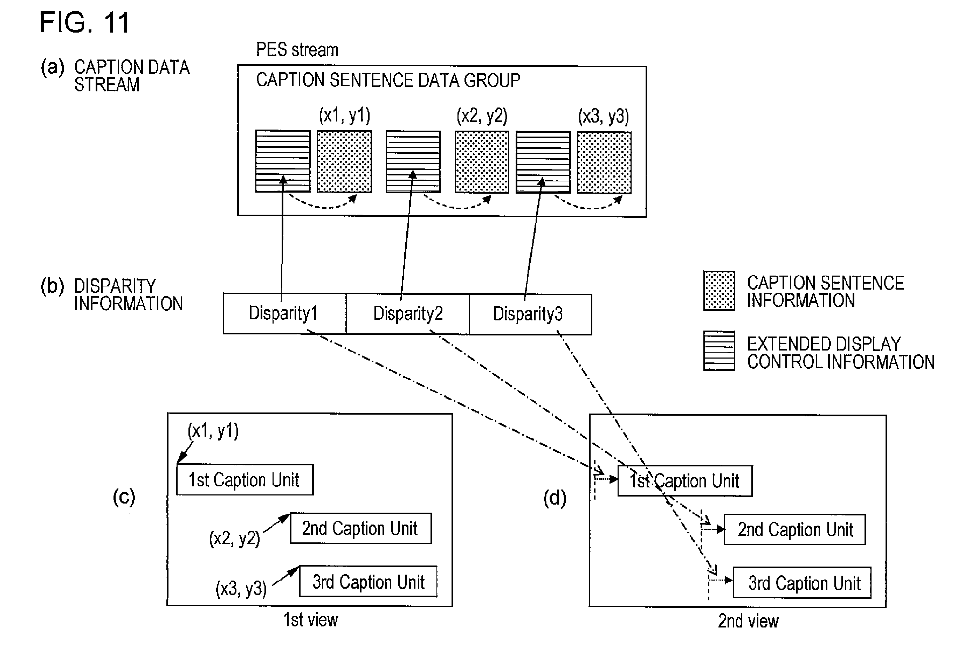

The disparity information creating unit 131 creates individual disparity vectors corresponding to the respective caption units, as illustrated in Fig. 11(b). "Disparity 1" is an individual disparity vector corresponding to "1st Caption Unit". "Disparity 2" is a disparity vector corresponding to "2nd Caption Unit". "Disparity 3" is an individual disparity vector corresponding to "3rd Caption Unit".

Fig. 11(a) illustrates an example configuration of a PES stream of a caption sentence data group in the caption data stream (PES stream) generated by the caption encoder 133. The pieces of caption sentence information (caption sentence data) of the respective caption units are inserted into the PES stream of the caption sentence data group. Also, pieces of display control information (disparity information) corresponding to the pieces of caption sentence information of the respective caption units are inserted into the PES stream of this caption sentence data group. In this case, pieces of disparity information serving as the pieces of display control information are the individual disparity vectors created by the disparity information creating unit 131, as described above.

Note that the setting data about the display areas of the respective caption units is inserted as pieces of caption management data (control codes) into the PES stream of a caption management data group, although not illustrated. Also, the display areas of the caption units "1st Caption Unit", "2nd Caption Unit", and "3rd Caption unit" are represented by (x1, y1), (x2, y2) and (x3, y3), respectively.

Fig. 11(c) illustrates a first view in which the individual caption units (captions) are superimposed, for example, a right-eye image. Also, Fig. 11(d) illustrates a second view in which the individual caption units are superimposed, for example, a left-eye image. The individual disparity vectors corresponding to the respective caption units are used for, for example, giving disparity between the individual caption units superimposed on the right-eye image and the individual caption units superimposed on the left-eye image, as illustrated.

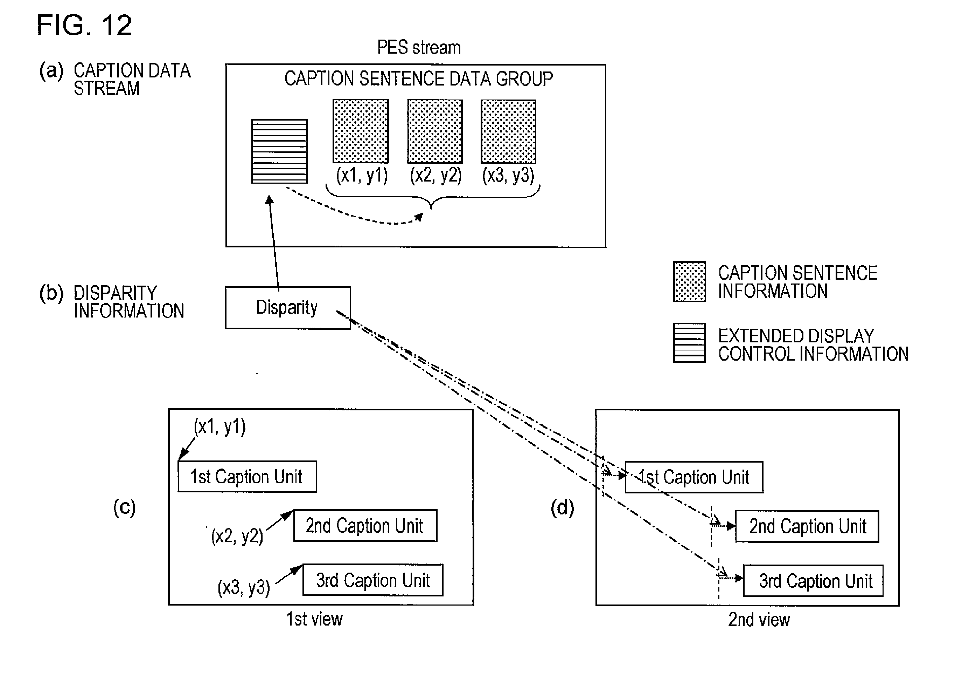

Next, a description will be given of a case where a common disparity vector is created by the disparity information creating unit 131. In this example, three caption units (captions) "1st Caption Unit", "2nd Caption Unit", and "3rd Caption unit" are displayed on the same screen. The disparity information creating unit 131 creates a common disparity vector "Disparity" common to the individual caption units, as illustrated in Fig. 12(b).

Fig. 12(a) illustrates an example configuration of a PES stream of a caption sentence data group in the caption data stream (PES stream) generated by the caption encoder 133. The pieces of caption sentence information (caption sentence data) of the respective caption units are inserted into the PES stream of the caption sentence data group. Also, display control information (disparity information) corresponding in common to the pieces of caption sentence information of the respective caption units is inserted into the PES stream of the caption sentence data group. In this case, the disparity information serving as display control information is a common disparity vector created by the disparity information creating unit 131, as described above.

The setting data about the display areas of the respective caption units is inserted as pieces of caption management data (control codes) into the PES stream of a caption management data group, although not illustrated. The display areas of the caption units "1st Caption Unit", "2nd Caption Unit", and "3rd Caption unit" are represented by (x1, y1), (x2, y2) and (x3, y3), respectively.

Fig. 12(c) illustrates a first view in which the individual caption units (captions) are superimposed, for example, a right-eye image. Also, Fig. 12(d) illustrates a second view in which the individual caption units are superimposed, for example, a left-eye image. The common disparity vector common to the individual caption units is used for, for example, giving disparity between the individual caption units superimposed on the right-eye image and the individual caption units superimposed on the left-eye image, as illustrated.

In the examples illustrated in Figs. 11(c) and (d) and Figs. 12(c) and (d), only the positions of the respective caption units superimposed on the second view (for example, a left-eye image) are shifted. However, a case where only the positions of the respective caption units superimposed on the first view (for example, a right-eye image) are shifted, or a case where the positions of the respective caption units superimposed on both the views are shifted may be acceptable.

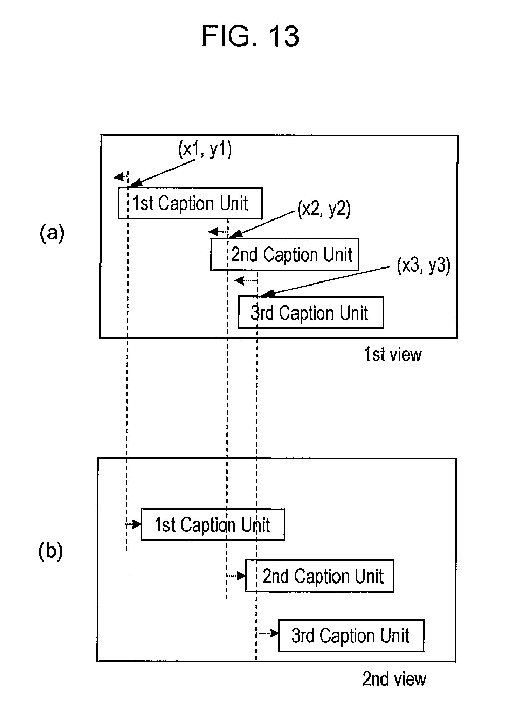

Figs. 13(a) and (b) illustrate a case where the positions of the caption units superimposed on both the first and second views are shifted. In this case, the shift values (offset values) D[i] of the respective caption units in the first view and the second view are obtained in the following manner on the basis of the value "disparity[i]" of the disparity vectors "Disparity" corresponding to the respective caption units.

That is, in a case where disparity[i] is an even number, "D[i] = -disparity[i]/2" is obtained in the first view, and "D[i] = disparity[i]/2" is obtained in the second view. Accordingly, the positions of the respective caption units superimposed on the first view (for example, a right-eye image) are shifted to the left by "disparity[i]/2". Also, the positions of the respective caption units superimposed on the second view (for example, a left-eye image) are shifted to the right by "disparity[i]/2".

Also, in a case where disparity[i] is an odd number, "D[i] = -(disparity[i]+1)/2" is obtained in the first view, and "D[i] = (disparity[i]-1)/2" is obtained in the second view. Accordingly, the positions of the respective caption units superimposed on the first view (for example, a right-eye image) are shifted to the left by "(disparity[i]+1)/2". Also, the positions of the respective caption units superimposed on the second view (for example, a left-eye image) are shifted to the right by "(disparity[i]-1)/2".

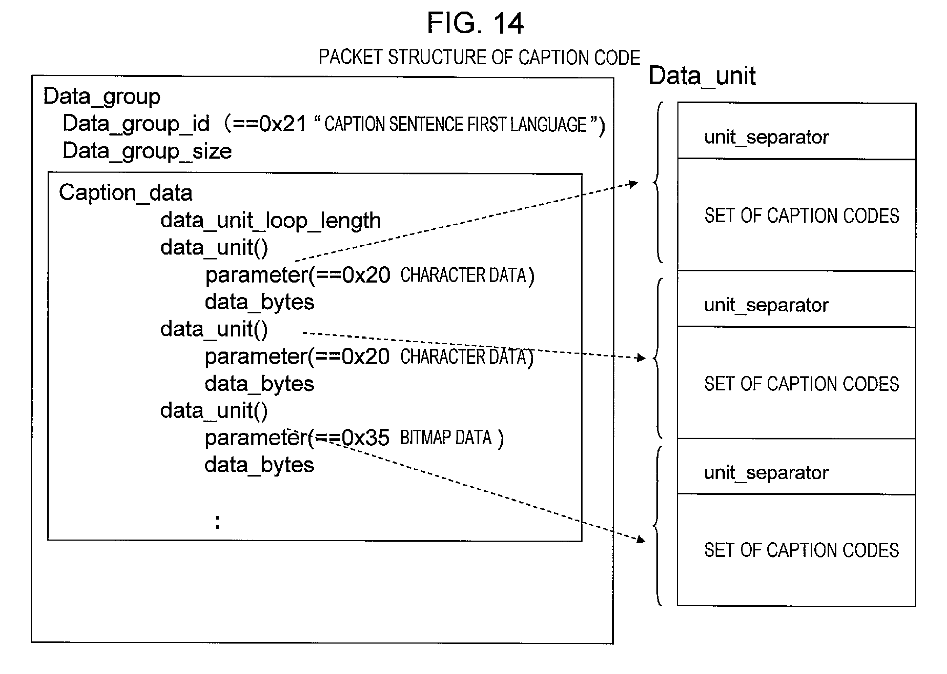

Now, the packet structures of caption codes and control codes will be briefly described. First, a basic packet structure of caption codes included in a PES stream of a caption sentence data group will be described. Fig. 14 illustrates the packet structure of caption codes. "Data_group_id" represents data group identification. Here, it represents a caption sentence data group. "Data_group_id" representing a caption sentence data group further specifies a language. For example, "Data_group_id==0x21" represents a caption sentence data group and a caption sentence (first language).

"Data_group_size" represents the number of bytes of the subsequent data group data. In the case of a caption sentence data group, the data group data is caption sentence data (caption_data). In the caption sentence data, one or more data units are arranged. The individual data units are separated from each other by a data unit separation code (unit_separator). Caption codes are arranged as data unit data (data_unit_data) in each data unit.

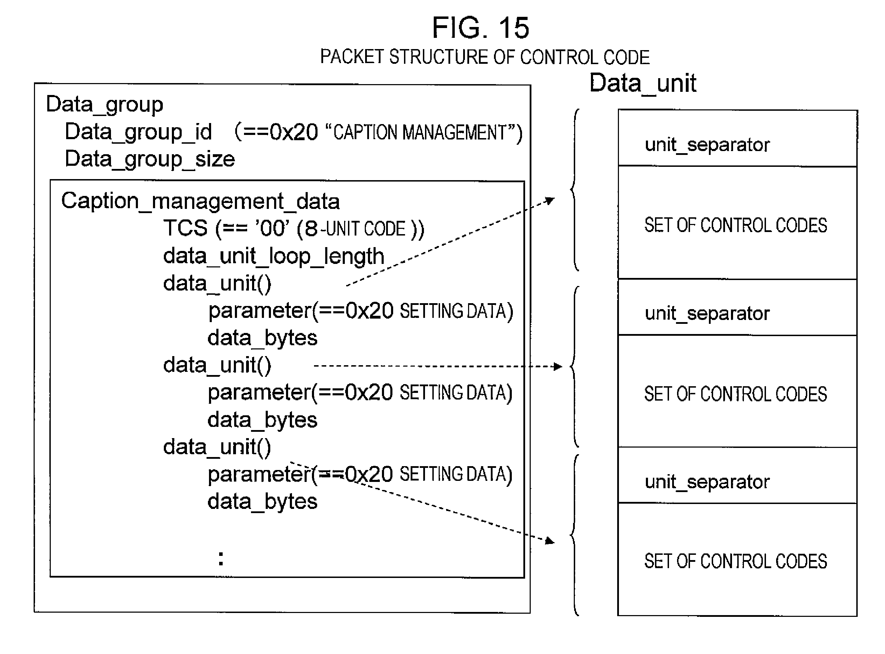

Next, the packet structure of control codes will be described. Fig. 15 illustrates the packet structure of control codes included in a PES stream of a caption management data group. "Data_group_id" represents data group identification. Here, it represents a caption management data group, and "Data_group_id==0x20" is obtained. "Data_group_size" represents the number of bytes of the subsequent data group data. In the case of a caption management data group, the data group data is caption management data (caption_management_data).

In the caption management data, one or more data units are arranged. The individual data units are separated from each other by a data unit separation code (unit_separator). Control codes are arranged as data unit data (data_unit_data) in each data unit. In this embodiment, the value of a disparity vector is given as an 8-unit code. "TCS" is 2-bit data and represents a character coding method. Here, "TCS==00", which represents an 8-unit code.

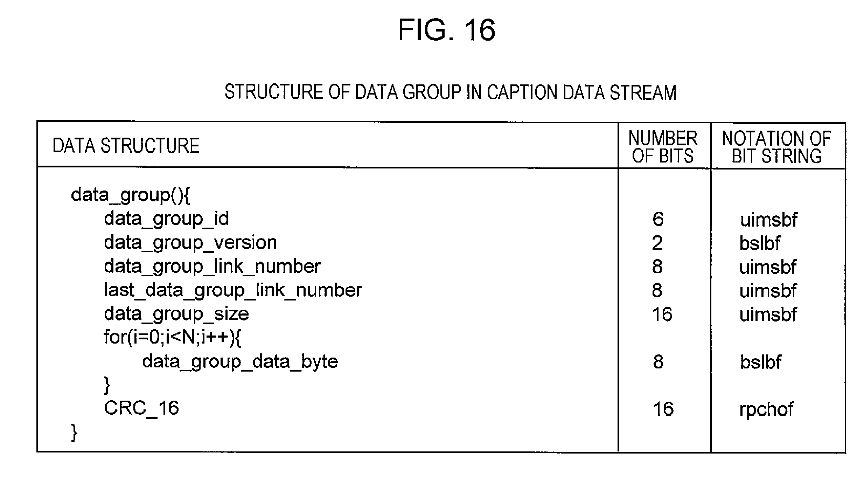

Fig. 16 illustrates a structure of a data group in a caption data stream (PES stream). A 6-bit field of "data_group_id" represents data group identification, and identifies the type of caption management data and caption sentence data. A 16-bit field of "data_group_size" represents the number of bytes of the subsequent data group data in this data group field. The data group data is stored in "data_group_data_byte". "CRC_16" is a 16-bit cyclic redundancy check code. The coding section of this CRC code is from the top of "data_group_id" to the end of "data_group_data_byte".

In the case of a caption management data group, "data_group_data_byte" in the data group structure in Fig. 16 is caption management data (caption_management_data). In the case of a caption sentence data group, "data_group_data_byte" in the data group structure in Fig. 16 is caption data (caption_data).

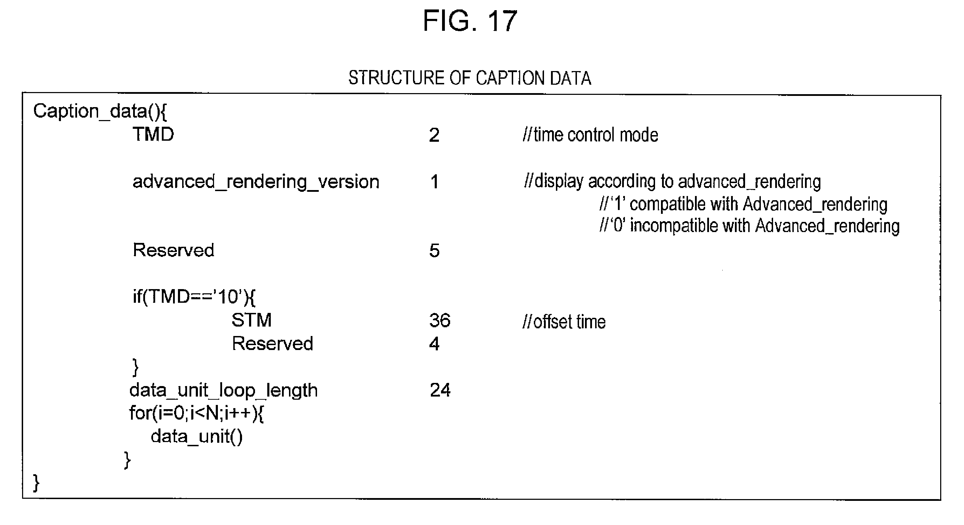

Fig. 17 schematically illustrates a structure of caption data. "advanced_rendering_version" is 1-bit flag information that is newly defined in this embodiment and that represents whether or not the caption data is compatible with extended display of captions. On the receiver side, whether or not the caption data is compatible with extended display of captions can be easily recognized on the basis of such flag information placed in an upper layer of a data unit.

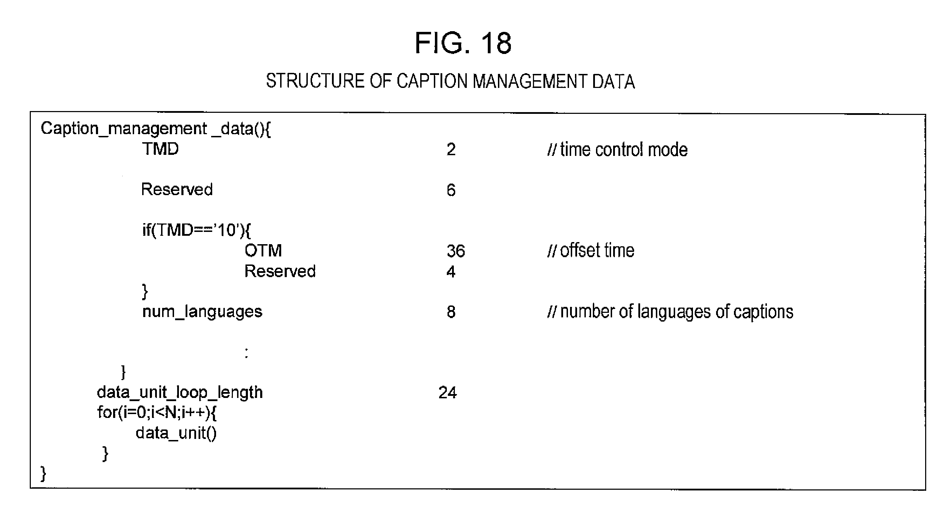

The 24-bit field of "data_unit_loop_length" indicates the number of bytes of the subsequent data unit in this caption sentence data field. The data unit to be transmitted in this caption sentence data field is stored in "data_unit". Also, Fig. 18 schematically illustrates a structure of caption management data. This structure is similar to that of the foregoing caption sentence data except that there is no "advanced_rendering_version", although a detailed description is omitted.

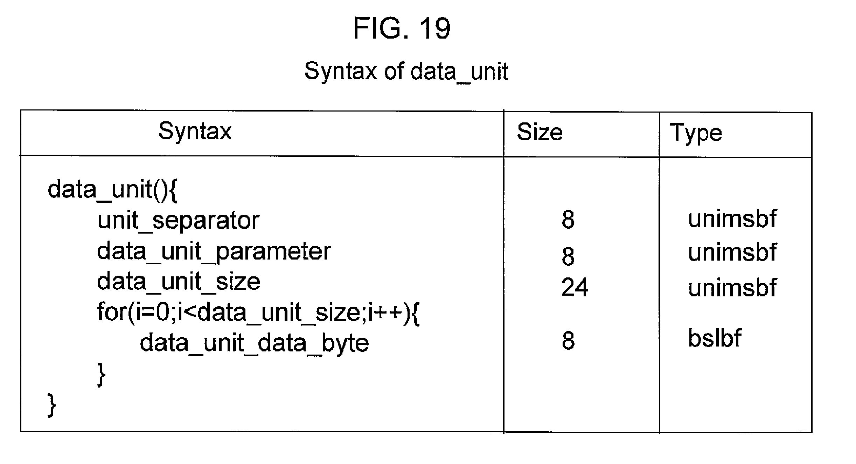

Fig. 19 illustrates a syntax of a data unit (data_unit) included in a caption data stream. The 8-bit field of "unit_separator" indicates a data unit separation code, that is, "0x1F". The 8-bit field of "data_unit_parameter" is a data unit parameter for identifying the type of data unit.

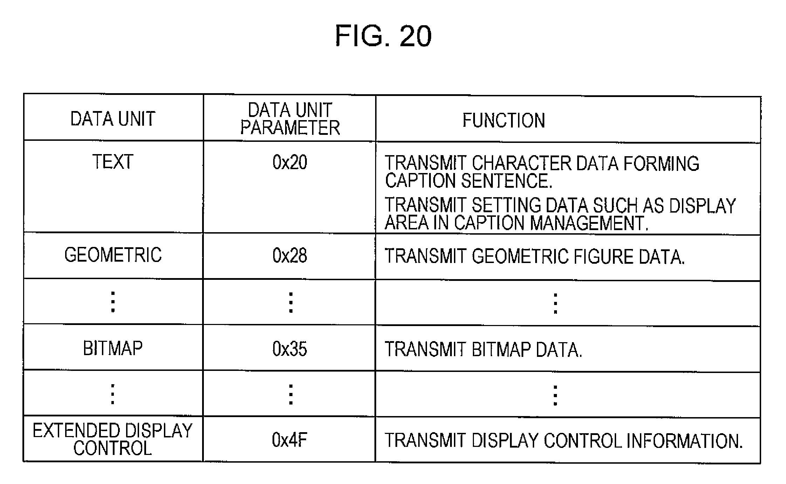

Fig. 20 illustrates the types of data unit, data unit parameters, and functions. For example, a data unit parameter indicating a data unit of text is "0x20". Also, for example, a data unit parameter indicating a data unit of geometric is "0x28". Also, for example, a data unit parameter indicating a data unit of bitmap is "0x35". In this embodiment, a data unit of extended display control for storing display control information (extended display control information) is newly defined, and the data unit parameter indicating this data unit is "0x4F", for example.

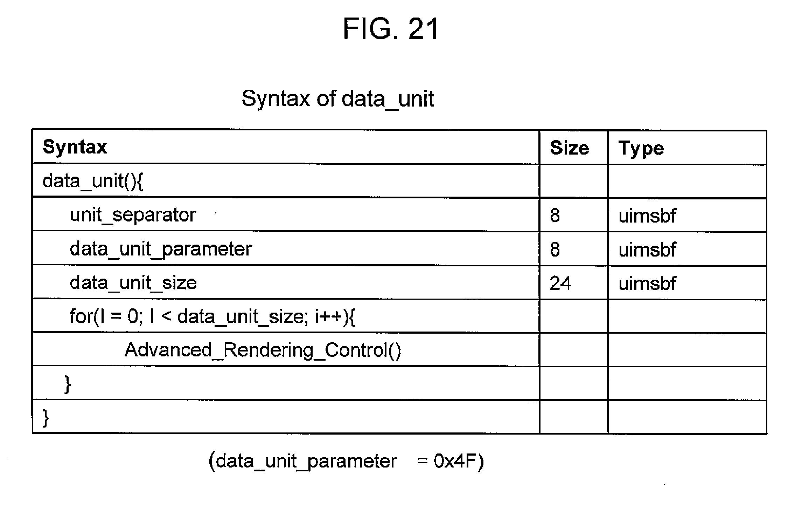

In this data unit field, the 24-bit field of "data_unit_size" indicates the number of bytes of the subsequent data unit. The data unit data is stored in "data_unit_data_byte". Fig. 21 illustrates a syntax of a data unit (data_unit) of extended display control. In this case, the data unit parameter is "0x4F", and display control information is stored in "Advanced_Rendering_Control" as "data_unit_data_byte".

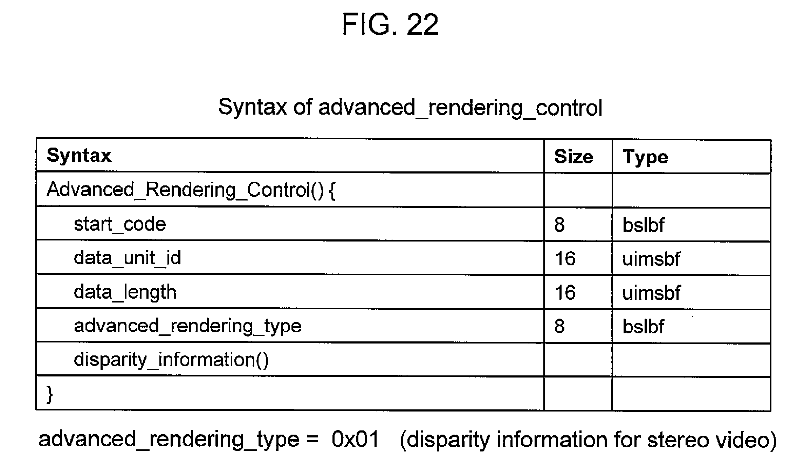

Fig. 22 illustrates a syntax of "Advanced_Rendering_Control". Fig. 22 illustrates a syntax in the case of inserting disparity information for stereo video as display control information. That is, Fig. 22 illustrates a syntax of "Advanced_Rendering_Control" in a data unit (data_unit) of extended display control included in a caption sentence data group.

The 8-bit field of "start_code" indicates the start of "Advanced_Rendering_Control". The 16-bit field of "data_unit_id" indicates a data unit ID. The 16-bit field of "data_length" indicates the number of bytes of the subsequent data in the field of advanced rendering control. The 8-bit field of "Advanced_rendering_type" is an advanced rendering type that specifies the type of display control information. Here, the data unit parameter is "0x01", for example, which indicates that display control information is "disparity information for stereo video". Disparity information is stored in "disparity_information".

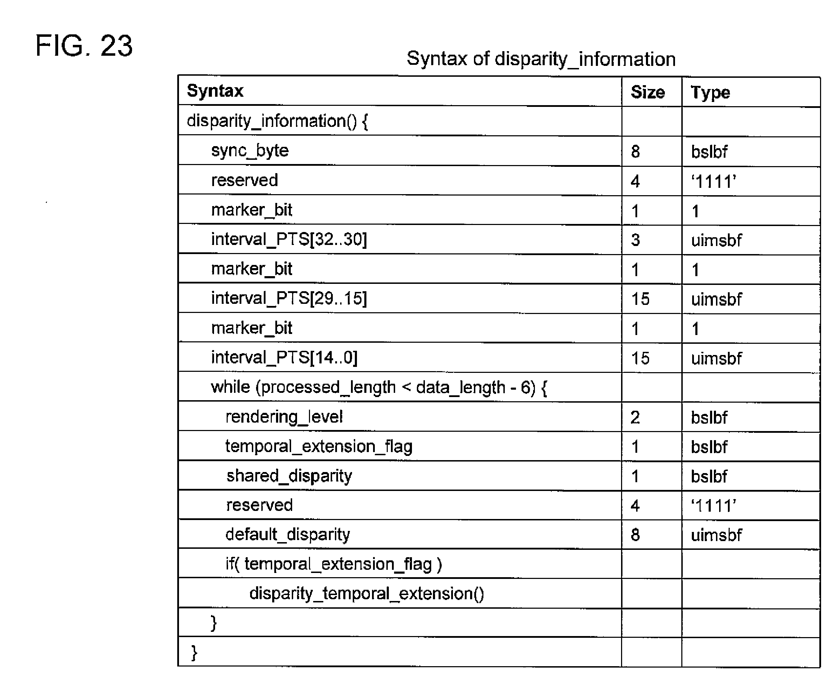

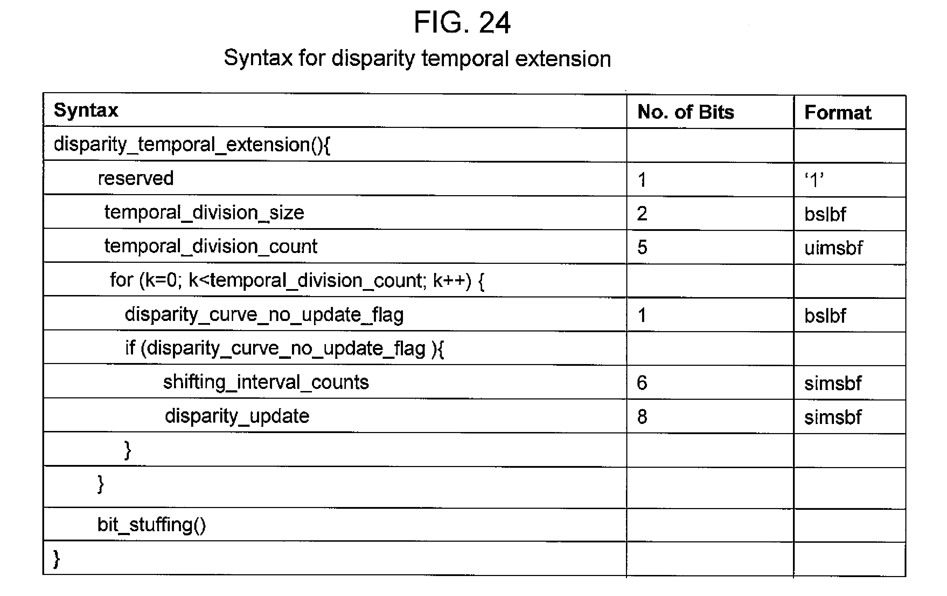

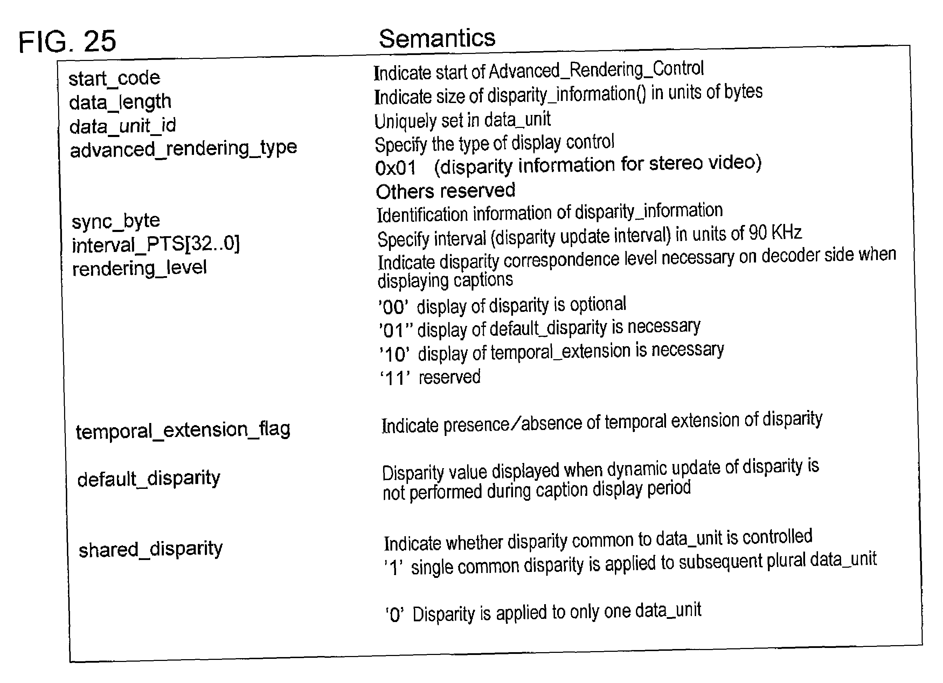

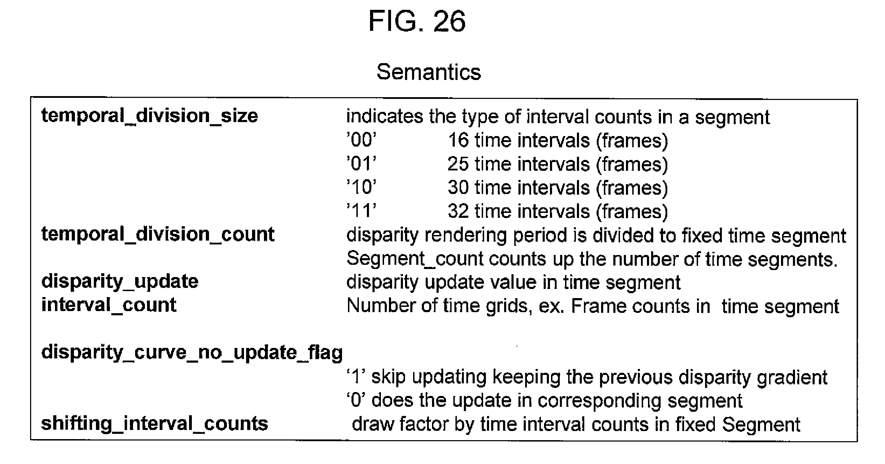

Note that Figs. 25 and 26 illustrate main data specification content in the above-described syntax of "Advanced_Rendering_Control", and furthermore, in the syntax of "disparity_information" illustrated in Figs. 23 and 24 described below.

Figs. 23 and 24 illustrate a syntax of "disparity_information" in "Advanced_Rendering_Control" in a data unit (data_unit) of extended display control included in a caption sentence data group. The 8-bit field of "sync_byte" is identification information of "disparity_information", and indicates the start of "disparity_information". "interval_PTS[32..0]" specifies a frame period (interval of one frame) in an updated frame interval of disparity information (disparity) in units of 90 KHz. That is, "interval_PTS[32..0]" represents, with 33-bit length, a value obtained by measuring the frame period in a clock of 90 KHz.

By specifying a frame period using "interval_PTS[32..0]" in disparity information, the update frame interval of disparity information intended on the transmitter side can be properly transmitted to the receiver side. If such information is not added, a frame period of video is referred to on the receiver side, for example.

"rendering_level" represents the correspondence level of disparity information (disparity) that is necessary on the receiver side (decoder side) when displaying captions. "00" represents that 3D display of captions using disparity information is optional. "01" represents that 3D display of captions using disparity information (default_disparity) used in common in a caption display period is necessary. "10" represents that 3D display of captions using disparity information (disparity_update) that is sequentially updated in the caption display period is necessary.

"temporal_extension_flag" is 1-bit flag information indicating the presence/absence of disparity information that is sequentially updated in the caption display period (disparity_update). In this case, "1" represents presence, and "0" represents absence. The 8-bit field of "default_disparity" indicates default disparity information. The default disparity information is disparity information in the case of not performing update, that is, disparity information used in common in the caption display period.

"shared_disparity" indicates whether control of disparity information (disparity) common to data units (Data_unit) is to be performed. "1" represents that a single piece of common disparity information (disparity) is applied to a plurality of subsequent data units (Data_unit). "0" represents that a single piece of disparity information (disparity) is applied to only a single data unit (data_unit).

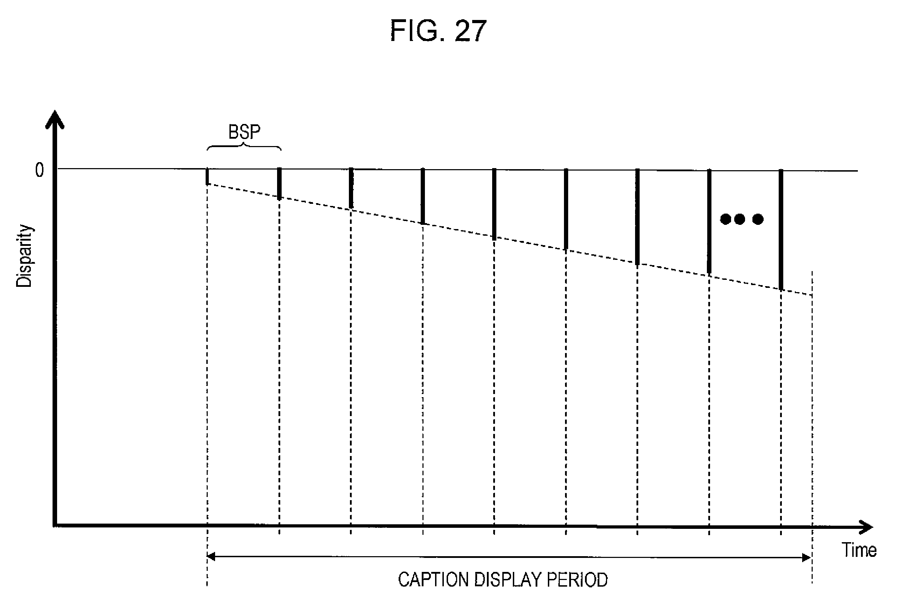

When "temporal_extension flag" is "1", disparity information has "disparity_temporal_extension()". Basically, disparity information that is to be updated in each base segment period (BSP) is stored therein. Fig. 27 illustrates an example of updating disparity information in each BSP. Here, the BSP means an update frame interval. As is clear from Fig. 27, the disparity information that is sequentially updated in the caption display period includes disparity information about an initial frame in the caption display period and disparity information about subsequent frames in each of BSPs (update frame intervals).

The two-bit field of "temporal_division_size" indicates the number of frames included in a BSP (update frame interval). "00" represents 16 frames. "01" represents 25 frames. "10" represents 30 frames. Furthermore, "11" represents 32 frames.

"temporal_division_count" represents the number of BSPs included in the caption display period. "disparity_curve_no_update_flag" is 1-bit flag information indicating whether or not disparity information is updated. "1" represents that disparity information is not updated at the edge of the corresponding BSP, that is, update is skipped. "0" represents that disparity information is updated at the edge of the corresponding BSP.

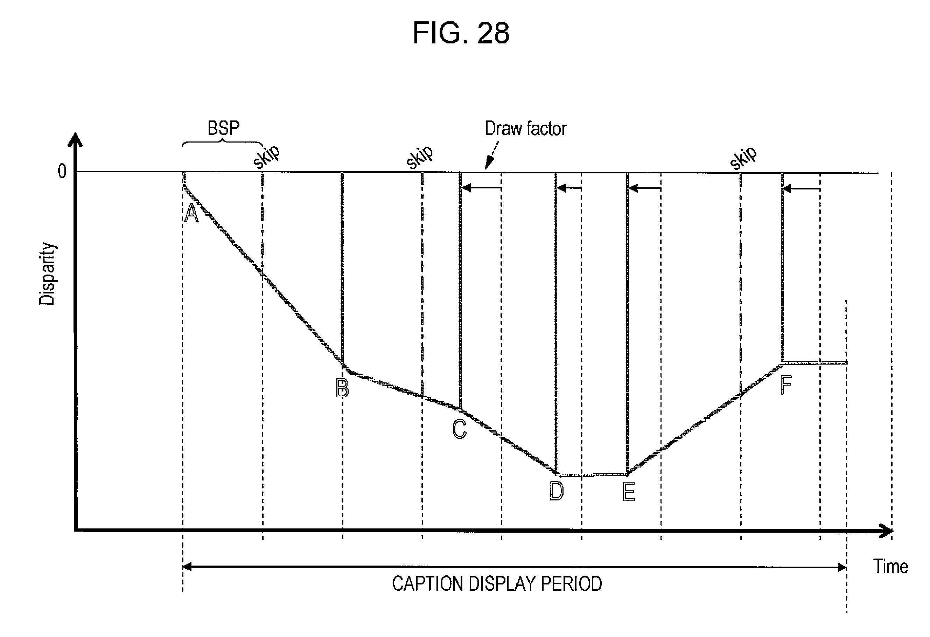

Fig. 28 illustrates an example of updating disparity information in each BSP. In the figure, disparity information is not updated at the edge of the BSP with "skip". With the existence of such flag information, disparity information is not updated if a period in which change in the frame direction of the disparity information is small, and transmission of the disparity information in that period can be omitted, thereby suppressing the data amount of the disparity information.

When "disparity_curve_no_update_flag" is "0" and disparity information is updated, the disparity information includes "shifting_interval_counts" of the corresponding BSP. Also, when "disparity_curve_no_update_flag" is "0" and disparity information is updated, the disparity information includes "disparity_update". The 6-bit field of "shifting_interval_counts" indicates a draw factor for adjusting a BSP (update frame interval), that is, the number of frames to be drawn.

In the example of updating disparity information in each BSP illustrated in Fig. 28, the BSP is adjusted using a draw factor regarding the update timings of disparity information at time points C to F. The existence of such adjustment information enables adjustment of BSPs (update frame intervals), so that changes in the time direction (frame direction) of disparity information can be properly transmitted to the receiver side.

As for the adjustment of a BSP (update frame interval), the BSP may be adjusted in the longer direction by adding frames, as well as in the shorter direction by drawing frames. For example, a bidirectional adjustment can be performed by setting an integer with a sign to the 6-bit field of "shifting_interval_counts".

The 8-bit field of "disparity_update" indicates the disparity information of the corresponding BSP. "disparity_update" in k = 0 is the initial value of the disparity information that is sequentially updated at update frame intervals in the caption display period, that is, the disparity information about an initial frame in the caption display period.

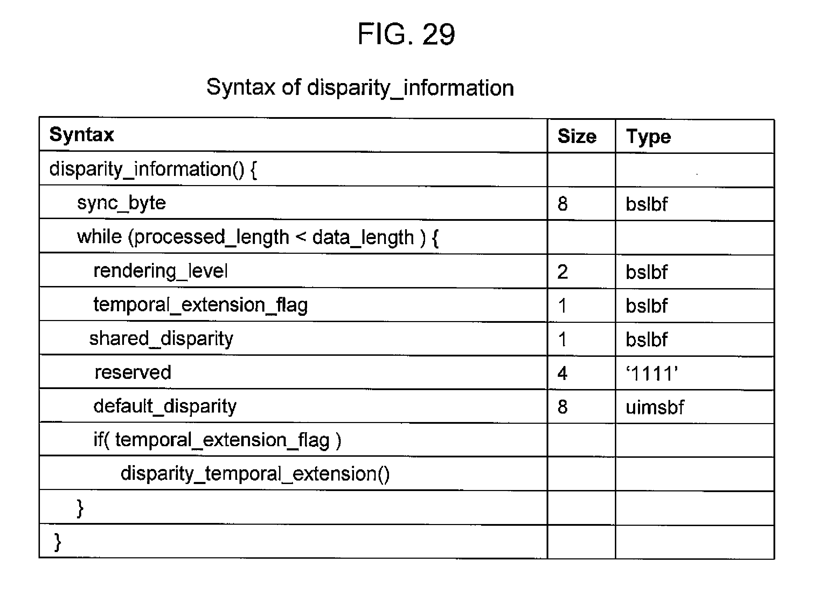

In the syntax of "disparity_information" illustrated in Fig. 23, "interval_PTS[32..0]" is added. However, the syntax of "disparity_information" without "interval_PTS[32..0]" may be employed. In that case, the syntax of "disparity_information" is that illustrated in Fig. 29.

Referring back to Fig. 2, the video encoder 113 performs encoding on the stereo image data supplied from the data retrieving unit 130 in accordance with MPEG4-AVC, MPEG2, VC-1, or the like, thereby generating a video elementary stream. The audio encoder 117 performs encoding on the audio data supplied from the data retrieving unit 130 in accordance with MPEG-2 Audio AAC or the like, thereby generating an audio elementary stream.

The multiplexer 122 multiplexes the individual elementary streams output from the video encoder 113, the audio encoder 117, and the caption encoder 133. Then, the multiplexer 122 outputs bit stream data (transport stream) BSD serving as transmission data (multiplexed data stream).

The operation of the transmission data generating unit 110 illustrated in Fig. 2 will be briefly described. The stereo image data output from the data retrieving unit 130 is supplied to the video encoder 113. In the video encoder 113, encoding is performed on the stereo image data in accordance with MPEG4-AVC, MPEG2, VC-1, or the like, so that a video elementary stream including the encoded video data is generated. This video elementary stream is supplied to the multiplexer 122.

Also, in the caption producing unit 132, caption data based on the ARIB method is produced. The caption data is supplied to the caption encoder 133. In the caption encoder 133, a caption elementary stream (caption data stream) including the caption data produced by the caption producing unit 132 is generated. This caption elementary stream is supplied to the multiplexer 122.

Also, the disparity vectors of the respective pixels output from the data retrieving unit 130 are supplied to the disparity information creating unit 131. In the disparity information creating unit 131, disparity vectors (horizontal-direction disparity vectors) corresponding to a certain number of caption units (captions) to be displayed on the same screen are created through the downsizing process. In this case, in the disparity information creating unit 131, the disparity vectors of the respective caption units (individual disparity vectors) or a disparity vector common to all the caption units (common disparity vector) is created.

The disparity vectors created by the disparity information creating unit 131 are supplied to the caption encoder 133. In the caption encoder 133, the disparity vectors are caused to be included in a caption data stream (see Figs. 11 and 12). The pieces of caption data of the respective caption units to be displayed on the same screen are inserted as pieces of caption sentence data (caption codes) into a PES stream of a caption sentence data group in the caption data stream. Also, disparity vectors (disparity information) are inserted as display control information of captions into the PES stream of the caption sentence data group in the caption data stream. In this case, the disparity vectors are inserted into newly defined data units of extended display control for transmitting display control information (see Figs. 21 to 24 and 29).

Also, the audio data output from the data retrieving unit 130 is supplied to the audio encoder 117. In the audio encoder 117, encoding is performed on the audio data in accordance with MPEG-2 Audio AAC or the like, so that an audio elementary stream including the encoded audio data is generated. This audio elementary stream is supplied to the multiplexer 122.

As described above, the multiplexer 122 is supplied with the elementary streams from the video encoder 113, the audio encoder 117, and the caption encoder 133. Then, in the multiplexer 122, the elementary streams supplied from the respective encoders are packetized and multiplexed, so that bit stream data (transport stream) BSD as transmission data is obtained.

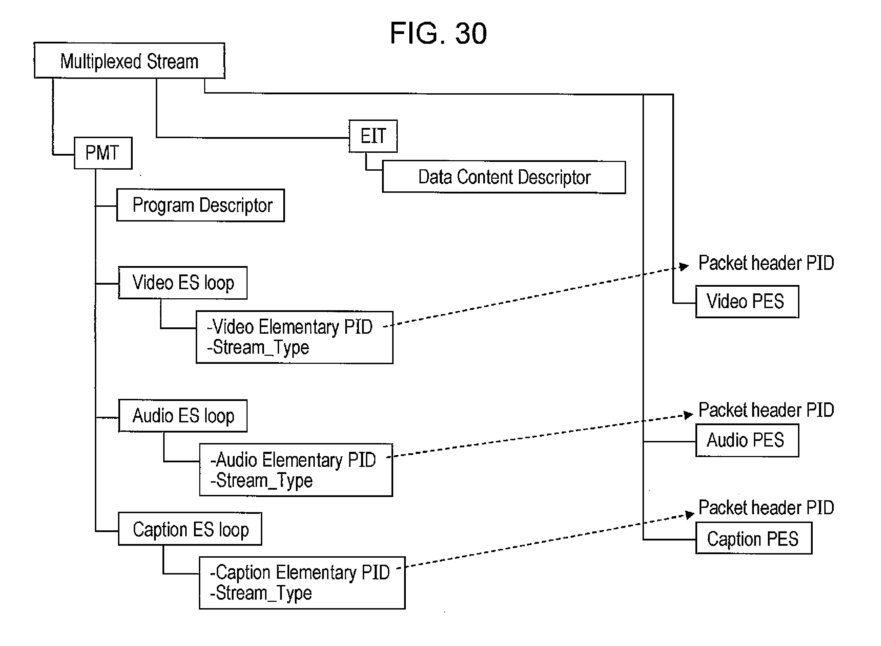

Fig. 30 illustrates an example configuration of a typical transport stream (multiplexed data stream) including a video elementary stream, an audio elementary stream, and a caption elementary stream. This transport stream includes PES packets obtained by packetizing the individual elementary streams. In this example configuration, PES packets "Video PES" of the video elementary stream are included. Also, in this example configuration, PES packets "Audio PES" of the audio elementary stream and PES packets "Caption PES" of the caption elementary stream are included.

Also, the transport stream includes a program map table (PMT) serving as program specific information (PSI). The PSI is information indicating the programs to which the individual elementary streams included in the transport stream belong. Also, the transport stream includes an event information table (EIT) serving as serviced information (SI) for performing management in units of events.

A program descriptor describing information related to the entire program exists in the PMT. Also, elementary loops having information related to the respective elementary streams exist in the PMT. In this example configuration, a video elementary loop, an audio elementary loop, and a caption elementary loop exist. In each elementary loop, information including a packet identifier (PID) and a stream type (Stream_Type) is provided for each stream. Also, a descriptor describing information related to the elementary stream is provided, although not illustrated.

In this embodiment, the transport stream (multiplexed data stream) output from the multiplexer 122 (see Fig. 2) includes flag information inserted thereinto. The flag information indicates whether or not the caption data stream is compatible with extended display control of captions. Here, extended display control of captions is 3D caption display using disparity information, for example. In this case, the receiver side (set top box 200) can recognize whether or not the caption data stream is compatible with extended display control of captions without opening data in the caption data stream.

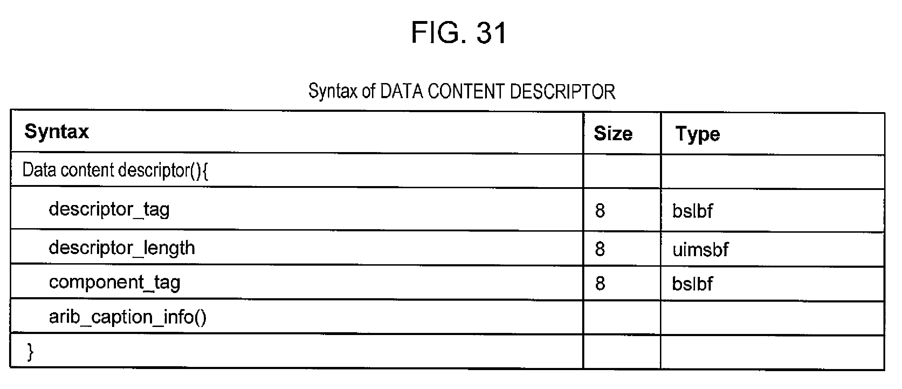

The multiplexer 122 inserts the flag information into the lower layer of the above-described EIT. In the example configuration in Fig. 30, a data content descriptor is inserted into the lower layer of the EIT. This data content descriptor includes flag information "Advanced_Rendering_support". Fig. 31 illustrates an example syntax of the data content descriptor. "descriptor_tag" is 8-bit data indicating the type of descriptor, that is, a data content descriptor here. "descriptor_length" is 8-bit data indicating the length (size) of the descriptor. The data indicates, as the length of the descriptor, the number of bytes after "descriptor_length".

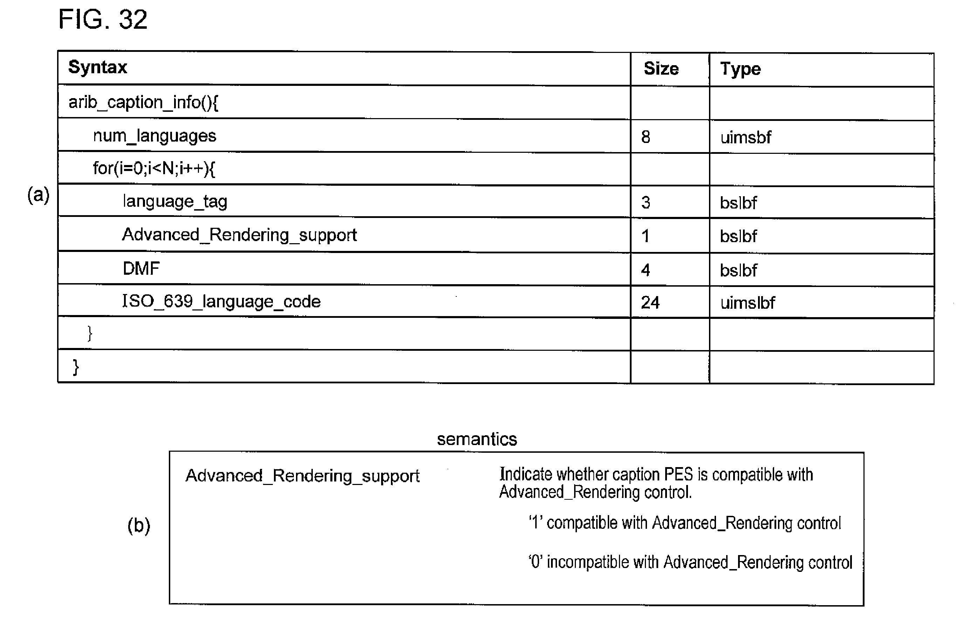

"component_tag" is 8-bint data for making association with a caption elementary stream. "arib_caption_info" is defined after "component_tag". Fig. 32(a) illustrates an example syntax of "arib_caption_info". "Advanced_Rendering_support" is 1-bit flag information indicating whether or not the caption data stream is compatible with extended display control of captions, as illustrated in Fig. 32(b). "1" represents that the caption data stream is compatible with extended display control of captions. "0" represents that the caption data stream is incompatible with extended display control of captions.

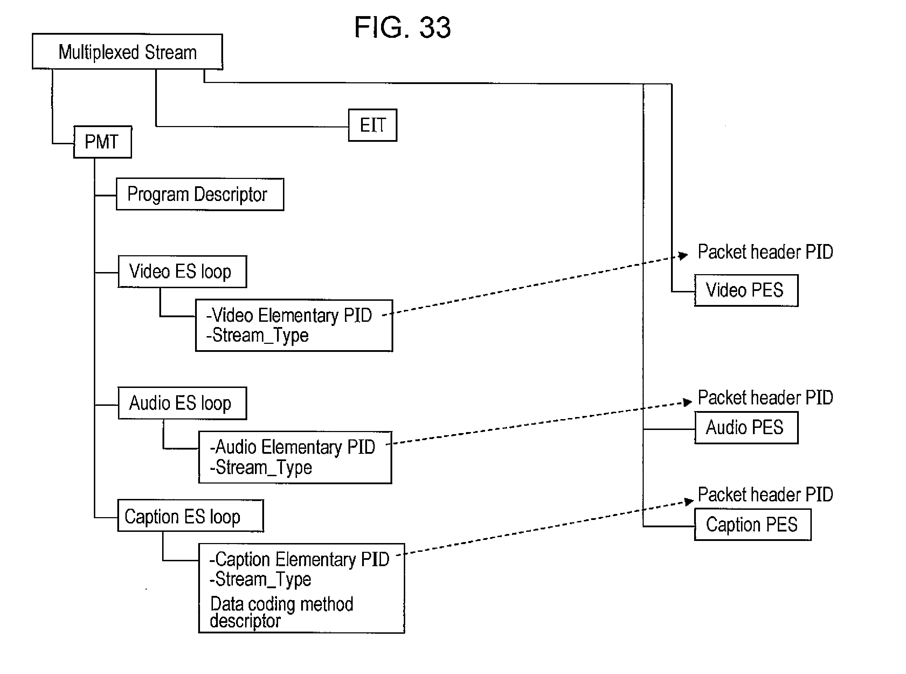

Also, the multiplexer 122 is capable of inserting the above-described flag information into the lower layer of the PMT. Fig. 33 illustrates an example configuration of a transport stream (multiplexed data stream) in that case. In this example configuration, a data coding method descriptor is inserted into the lower layer of a caption ES loop of the PMT. The data coding method descriptor includes flag information "Advanced_Rendering_support".

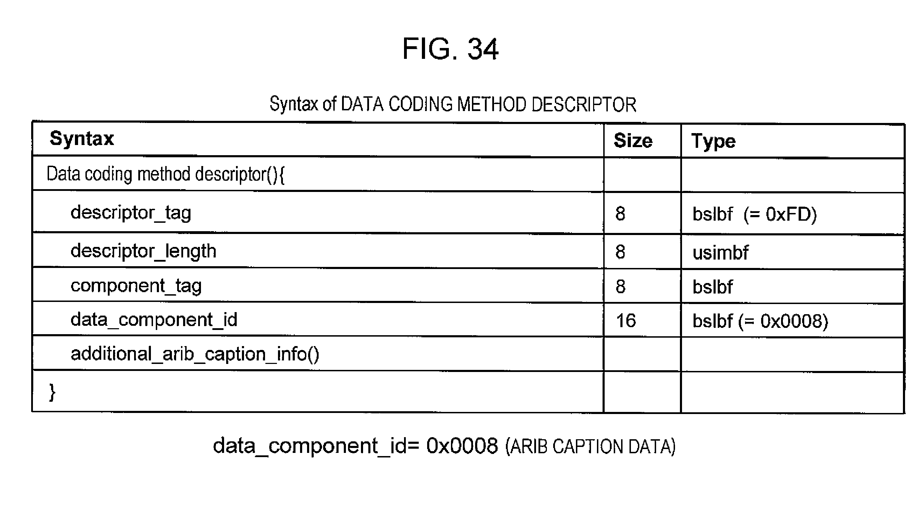

Fig. 34 illustrates an example syntax of the data coding method descriptor. "descriptor_tag" is 8-bit data indicating the type of the descriptor, that is, a data content descriptor here. "descriptor_length" is 8-bint data indicating the length (size) of the descriptor. The data indicates, as the length of the descriptor, the number of bytes after "descriptor_length".

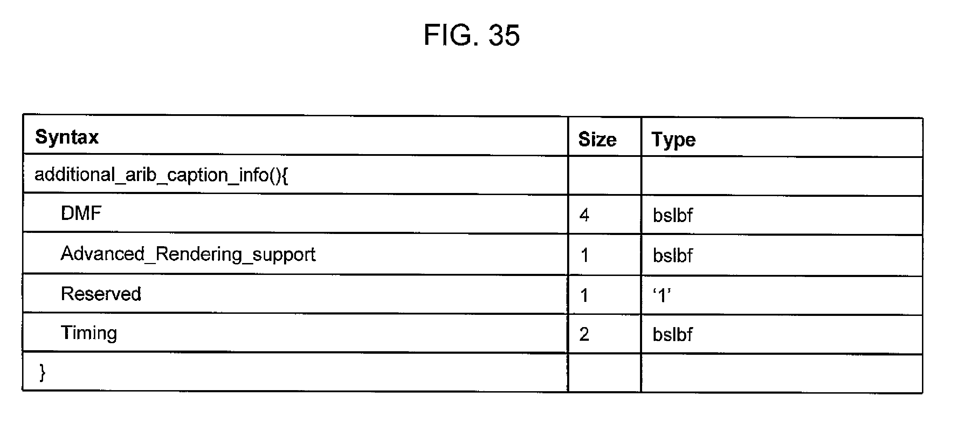

"component_tag" is 8-bit data for making association with a caption elementary stream. Here, "data_component_id" is "0x0008" representing caption data. "additional_arib_caption_info" is defined after "data_component_id". Fig. 35 illustrates an example syntax of "additional_arib_caption_info". "Advanced_Rendering_support" is 1-bit flag information indicating whether or not the caption data stream is compatible with extended display control of captions, as illustrated in Fig. 32(b). "1" represents that the caption data stream is compatible with extended display control of captions. "0" represents that the caption data stream is incompatible with extended display control of captions.

As described above, in the transmission data generating unit 110 illustrated in Fig. 2, the bit stream data BSD output from the multiplexer 122 is a multiplexed data stream including a video data stream and a caption data stream. The video data stream includes stereo image data. Also, the caption data stream includes the data of captions (caption units) based on the ARIB method and disparity vectors (disparity information).

Also, disparity information is inserted into data units for transmitting caption display control information in a PES stream of a caption sentence data group, so that caption sentence data (caption sentence information) is associated with disparity information. Thus, on the receiver side (set top box 200), appropriate disparity can be given using corresponding disparity vectors (disparity information) to caption units (captions) superimposed on a left-eye image and a right-eye image. Accordingly, the perspective consistency with individual objects in an image can be maintained in the optimum state when displaying the caption units (captions).

Also, in the transmission data generating unit 110 illustrated in Fig. 2, disparity information used in common in the caption display period (see "default_disparity" in Fig. 23) is inserted into a newly defined data unit of extended display control. Also, disparity information that is sequentially updated in the caption display period (see "disparity_update" in Fig. 24) can be inserted into this data unit. Also, flag information indicating the existence of disparity information that is sequentially updated in the caption display period is inserted into the data unit of extended display control (see "temporal_extension_flag" in Fig. 23).

Therefore, only disparity information that is used in common in the caption display period may be transmitted, or disparity information that is sequentially updated in the caption display period may be transmitted. By transmitting disparity information that is sequentially updated in the caption display period, the disparity given to superimposition information can be dynamically changed in accordance with changes of an image on the receiver side (set top box 200).

In the transmission data generating unit 110 illustrated in Fig. 2, the disparity information that is inserted into a data unit of extended display control and that is sequentially updated in the caption display period is basically disparity information for each BSP (see Fig. 27). That is, the disparity information includes disparity information about an initial frame in the caption display period and disparity information about subsequent frames in each of BSPs. The BSP (update frame interval) can be optionally set (see "temporal_division_size" in Fig. 24).

Thus, for example, when disparity information rapidly changes in the time direction (frame direction), the update frame interval is shortened, thereby being able to transmit changes in the time direction of disparity information to the receiver side (set top box 200) more accurately. Also, for example, when disparity information slowly changes in the time direction, the update frame interval is made longer, thereby being able to suppress the data amount of disparity information.

Also, in the transmission data generating unit 110 illustrated in Fig. 2, when disparity information that is sequentially updated in the caption display period is inserted into a data unit of extended display control, the following flag information is added. The flag information is flag information indicating whether or not disparity information is updated (see "disparity_curve_no_update_flag" in Fig. 24). The flag information is added to individual frames in each BSP (update frame interval). In this case, if a period continues in which the change in the time direction of disparity information is small, transmission of disparity information in that period can be omitted using the flag information (see the edge of BSP with "skip" in Fig. 28), so that the data amount of disparity information can be suppressed.

Also, in the transmission data generating unit 110 illustrated in Fig. 2, when disparity information that is sequentially updated in the caption display period is inserted into a data unit of extended display control, the following adjustment information is added. The adjustment information is adjustment information for adjusting a BSP (update frame interval) (see "shifting_interval_counts" in Fig. 24). In this case, the BSP can be optionally adjusted in the shorter direction or longer direction on the basis of the adjustment information. Accordingly, changes in the time direction (frame direction) of disparity information can be transmitted to the receiver side (set top box 200) more accurately (see adjustment using "Draw factor" in Fig. 28) .

Also, in the transmission data generating unit 110 illustrated in Fig. 2, information specifying a frame period is inserted into a data unit of extended display control (see "interval_PTS[32..0]" in Fig. 23). Accordingly, the BSP (update frame interval) of disparity information intended by the transmitter side (broadcast station 100) can be accurately transmitted to the receiver side (set top box 200). If such information is not added, the receiver side refers to the frame period of video, for example.

Also, in the transmission data generating unit 110 illustrated in Fig. 2, a data unit of extended display control includes information indicating the correspondence level of disparity information (disparity) that is necessary on the receiver side (decoder side) at the time of displaying captions (see "rendering_level" in Fig. 23). In this case, the correspondence to the disparity information on the receiver side can be controlled by using the information.

Also, in the transmission data generating unit 110 illustrated in Fig. 2, 1-bit flag information indicating whether or not the caption data stream is compatible with extended display of captions is inserted into the layer of the caption data stream (PES stream of the caption sentence data group), that is, into the upper layer of the data unit of extended display control (see "advanced_rendering_version" in Fig. 17). The receiver side can easily recognize whether or not the caption data stream is compatible with extended display of captions on the basis of the flag information.

Also, in the transmission data generating unit 110 illustrated in Fig. 2, flag information indicating whether or not the caption data stream is compatible with extended display control of superimposition information is inserted into the multiplexed data stream (transport stream), that is, into the system layer (see "Advanced_Redndering_support" in Figs. 32 and 35). Thus, the receiver side (set top box 200) can recognize whether or not the caption data stream is compatible with extended display control of captions without opening data in the caption data stream.

### [Description of set top box]

Referring back to Fig. 1, the set top box 200 receives bit stream data (transport stream) BSD that is transmitted using airwaves from the broadcast station 100. The bit stream data BSD includes stereo image data including left-eye image data and right-eye image data, and audio data. Also, the bit stream data BSD includes pieces of caption data of caption units, and furthermore disparity vectors (disparity information) for giving disparity to the caption units.

The set top box 200 includes a bit stream processing unit 201. The bit stream processing unit 201 extracts stereo image data, audio data, pieces of caption data of caption units, disparity vectors, etc., from the bit stream data BSD. The bit stream processing unit 201 generates the data of a left-eye image and a right-eye image on which captions are superimposed, using the stereo image data, the pieces of caption data of the caption units, etc.

In this case, the data of a left-eye caption and a right-eye caption to be superimposed on the left-eye image and the right-eye image is generated on the basis of a disparity vector and the caption data of a caption unit. Here, the left-eye caption and the right-eye caption are the same caption. However, the superimposition positions in an image of the left-eye caption and the right-eye caption are shifted by the disparity vector in the horizontal direction with respect to each other. Accordingly, disparity is given between the left-eye caption and the right-eye caption, and the position at which the caption is recognized is in front of the image.

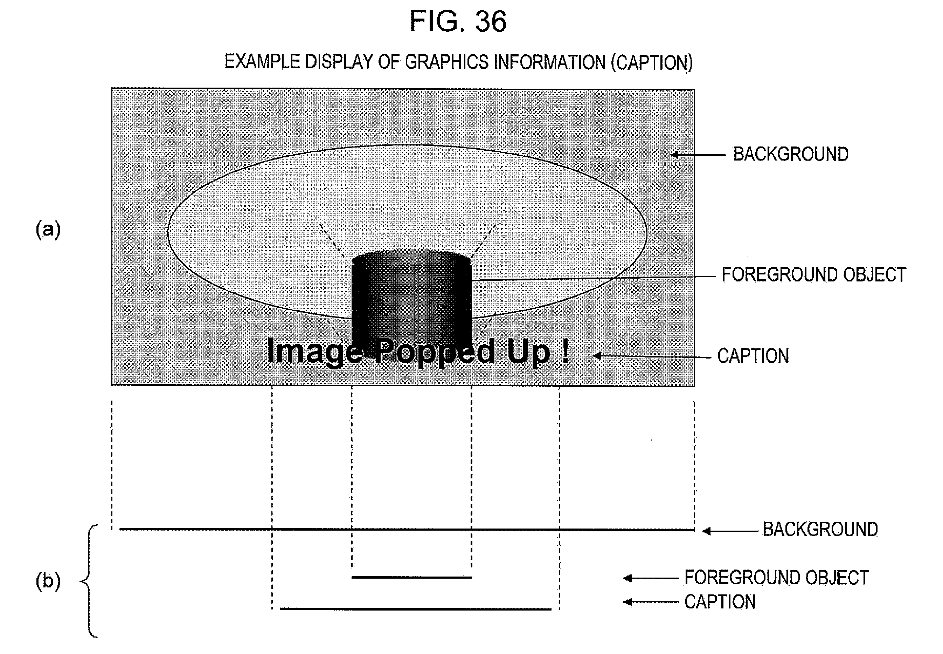

Fig. 36(a) illustrates an example display of a caption unit (caption) on an image. In this example display, a caption is superimposed on an image made up of a background and a foreground object. Fig. 36(b) illustrates the perspective of the background, foreground object, and caption, and illustrates that the caption is recognized as being the nearest.

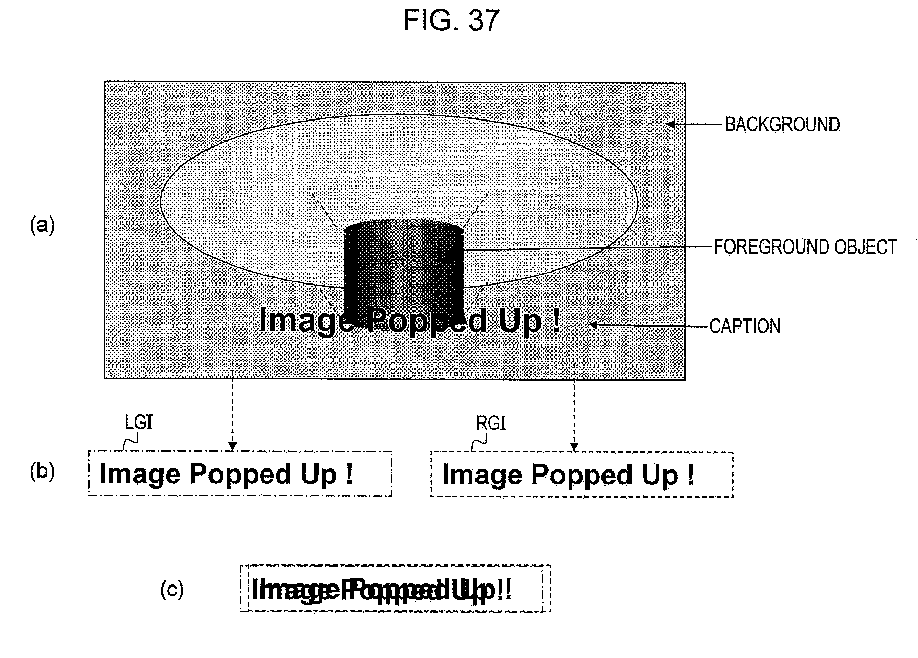

Fig. 37(a) illustrates an example display of a caption unit (caption) on an image, as in Fig. 35(a). Fig. 37(b) illustrates a left-eye caption LGI superimposed on a left-eye image and a right-eye caption RGI superimposed on a right-eye image. Fig. 37(c) illustrates that disparity is given between the left-eye caption LGI and the right-eye caption RGI so that the caption is recognized as being the nearest.

### [Example configuration of set top box]

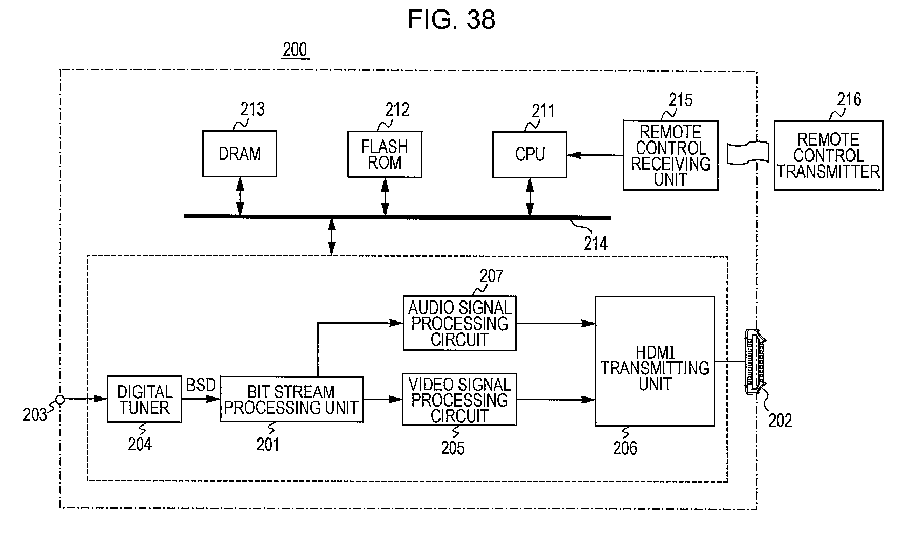

An example configuration of the set top box 200 will be described. Fig. 38 illustrates an example configuration of the set top box 200. The set top box 200 includes the bit stream processing unit 201, the HDMI terminal 202, an antenna terminal 203, a digital tuner 204, a video signal processing circuit 205, an HDMI transmitting unit 206, and an audio signal processing circuit 207. Also, the set top box 200 includes a central processing unit (CPU) 211, a flash read only memory (ROM) 212, a dynamic random access memory (DRAM) 213, an internal bus 214, a remote control receiving unit 215, and a remote control transmitter 216.

The antenna terminal 203 is a terminal for inputting a television broadcast signal that is received by a receiving antenna (not illustrated). The digital tuner 204 processes the television broadcast signal input to the antenna terminal 203, and outputs certain bit stream data (transport stream) BSD corresponding to a channel selected by a user.

The bit stream processing unit 201 extracts stereo image data, audio data, pieces of caption data of caption units, disparity vectors, etc., from the bit stream data BSD, as described above. The bit stream processing unit 201 combines the data of a left-eye caption and a right-eye caption with the stereo image data, thereby generating stereo image data to be displayed and outputting the data. Also, the bit stream processing unit 201 outputs the audio data. The specific configuration of the bit stream processing unit 201 will be described below.

The video signal processing circuit 205 performs an image quality adjustment process or the like on the stereo image data output from the bit stream processing unit 201 as necessary, and supplies the processed stereo image data to the HDMI transmitting unit 206. The audio signal processing circuit 207 performs an audio quality adjustment process or the like on the audio data output from the bit stream processing circuit 201 as necessary, and supplies the processed audio data to the HDMI transmitting unit 206.

The HDMI transmitting unit 206 transmits the data of an image (video) and audio of the baseband from the HDMI terminal 202, through the communication compatible with HDMI. In this case, the data is transmitted using a transition minimized differential (TMDS) channel of HDMI, and thus the data of the image and audio is packed and is output from the HDMI transmitting unit 206 to the HDMI terminal 202.

The CPU 211 controls the operation of the individual units of the set top box 200. The flash ROM 212 stores control software and stores data. The DRAM 213 forms a work area of the CPU 211. The CPU 211 expands software and data read from the flash ROM 212 on the DRAM 213 and starts the software, and controls the individual units of the set top box 200.

The remote control receiving unit 215 receives a remote control signal (remote control code) transmitted from the remote control transmitter 216, and supplies it to the CPU 211. The CPU 211 controls the individual units of the set top box 200 on the basis of this remote control code. The CPU 211, the flash ROM 212, and the DRAM 213 are connected to the internal bus 214.

The operation of the set top box 200 will be briefly described. A television broadcast signal input to the antenna terminal 203 is supplied to the digital tuner 204. The digital tuner 204 processes the television broadcast signal, and outputs certain bit stream data (transport stream) BSD corresponding to a channel selected by a user.

The bit stream data BSD output from the digital tuner 204 is supplied to the bit stream processing unit 201. In the bit stream processing unit 201, stereo image data, audio data, pieces of caption data of caption units, disparity vectors, etc. are extracted from the bit stream data BSD. Also, in the bit stream processing unit 201, the data of a left-eye caption and a right-eye caption is combined with the stereo image data, so that stereo image data to be displayed is generated. At this time, in the bit stream processing unit 201, disparity is given between the left-eye caption and right-eye caption on the basis of a disparity vector.

The stereo image data to be displayed that is generated by the bit stream processing unit 201 is supplied to the video signal processing circuit 205. In the video signal processing circuit 205, an image quality adjustment process or the like is performed as necessary on the stereo image data to be displayed. The processed stereo image data to be displayed that is output from the video signal processing circuit 205 is supplied to the HDMI transmitting unit 206.

Also, the audio data obtained in the bit stream processing unit 201 is supplied to the audio signal processing circuit 207. In the audio signal processing circuit 207, an audio quality adjustment process or the like is performed as necessary on the audio data. The processed audio data that is output from the audio signal processing circuit 207 is supplied to the HDMI transmitting unit 206. Then, the stereo image data and audio data supplied to the HDMI transmitting unit 206 are transmitted from the HDMI terminal 202 to the HDMI cable 400 using a TMDS channel of HDMI.

### [Example configuration of bit stream processing unit]

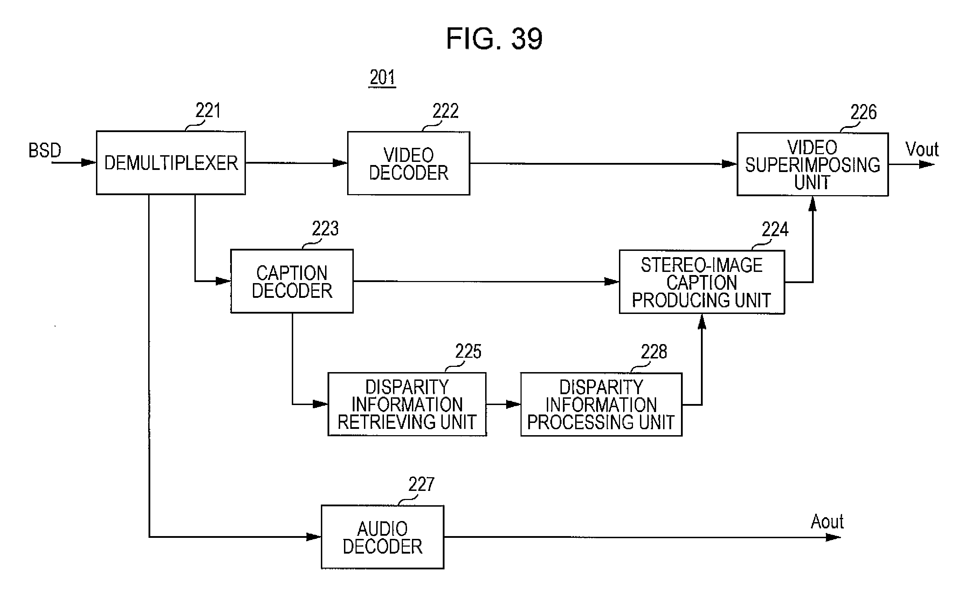

Fig. 39 illustrates an example configuration of the bit stream processing unit 201. The bit stream processing unit 201 has a configuration corresponding to the above-described transmission data generating unit 110 illustrated in Fig. 2. The bit stream processing unit 201 includes a demultiplexer 221, a video decoder 222, and a caption decoder 223. Furthermore, the bit stream processing unit 201 includes a stereo-image caption producing unit 224, a disparity information retrieving unit 225, a video superimposing unit 226, an audio decoder 227, and a disparity information processing unit 228.

The demultiplexer 221 extracts packets of video, audio, and captions from the bit stream data BSD, and transmits them to the respective decoders. The video decoder 222 performs an inverse process of the process performed by the above-described video encoder 113 of the transmission data generating unit 110. That is, the video decoder 222 reconstructs a video elementary stream from the video packets extracted by the demultiplexer 221, performs a decoding process, and obtains stereo image data including left-eye image data and right-eye image data. Examples of the method for transmitting the stereo image data are the above-described first transmission method ("Top & Bottom" method), second transmission method ("Side By Side" method), third transmission method ("Frame Sequential" method), and the like (see Fig. 4).

The caption decoder 223 performs an inverse process of the process performed by the above-described caption encoder 133 of the transmission data generating unit 110. That is, the caption decoder 223 reconstructs a caption elementary stream (caption data stream) from the caption packets extracted by the demultiplexer 221, performs a decoding process, and obtains the pieces of caption data of respective caption units (caption data based on the ARIB method).

The disparity information retrieving unit 225 retrieves disparity vectors (disparity information) corresponding to the respective caption units from the caption stream obtained through the caption decoder 223. In this case, the disparity vectors of the respective caption units (individual disparity vectors) or a disparity vector common to the individual caption units (common disparity vector) is obtained (see Figs. 11 and 12).

As described above, the caption data stream includes pieces of data of captions (caption units) based on the ARIB method and disparity information (disparity vectors). The disparity information is inserted into a data unit for transmitting caption display control information. Thus, the disparity information retrieving unit 225 can retrieve the disparity vectors in association with the pieces of caption data of the respective caption units.

The disparity information retrieving unit 225 obtains disparity information that is used in common in a caption display period (see "default_disparity" in Fig. 23). Also, the disparity information retrieving unit 225 may further obtain disparity information that is sequentially updated in the caption display period (see "disparity_update" in Fig. 24). The disparity information (disparity vectors) retrieved by the disparity information retrieving unit 225 is transmitted to the stereo-image caption producing unit 224 via the disparity information processing unit 228. The disparity information that is sequentially updated in the caption display period includes, as described above, the disparity information about an initial frame in the caption display period and the disparity information about subsequent frames in each of BSPs (update frame interval).

The disparity information processing unit 228 transmits the disparity information that is used in common in the caption display period to the stereo-image caption producing unit 224 without performing any process thereon. On the other hand, the disparity information processing unit 228 performs an interpolation process on the disparity information that is sequentially updated in the caption display period, thereby generating disparity information for an optional frame interval in the caption display period, for example, disparity information for one frame interval, and transmits the disparity information to the stereo-image caption producing unit 224.

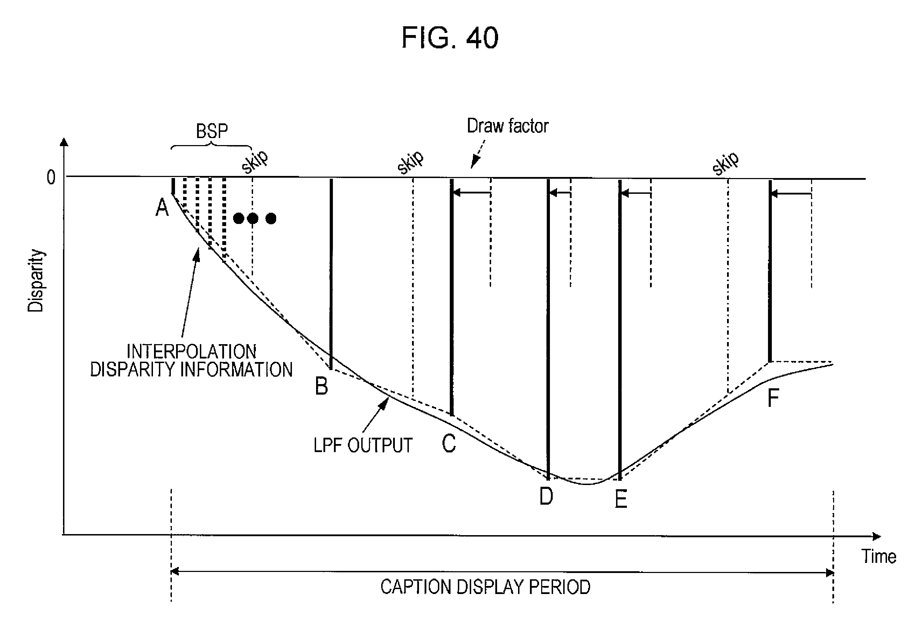

The disparity information processing unit 228 performs, as the foregoing interpolation process, an interpolation process including a low-pass filter (LPF) process in the time direction (frame direction), not a linear interpolation process, so as to moderate the change in the time direction (frame direction) of disparity information for certain frame intervals after the interpolation process. Fig. 40 illustrates an example of the foregoing interpolation process including the LPF process performed by the disparity information processing unit 228. This example corresponds to the above-described example of updating disparity information illustrated in Fig. 28.

The stereo-image caption producing unit 224 generates the data of a left-eye caption and a right-eye caption to be superimposed on a left-eye image and a right-eye image, respectively. This generation process is performed on the basis of the pieces of caption data of the respective caption units obtained by the caption decoder 223 and the disparity information (disparity vectors) supplied via the disparity information processing unit 228. Then, the stereo-image caption producing unit 224 outputs the data (bitmap data) of the left-eye caption and the right-eye caption.

In this case, the captions (caption units) for a left eye and a right eye are the same information. However, the superimposition positions in the image of the left-eye caption and the right-eye caption are shifted by the disparity vector in the horizontal direction with respect to each other, for example. Accordingly, a caption on which disparity adjustment has been performed in accordance with the perspective of individual objects in an image can be used as the same captions that are to be superimposed on the left-eye image and the right-eye image, so that the perspective consistency with the individual objects in the image can be maintained in display of this caption.

Here, if only disparity information (disparity vector) that is used in common in the caption display period is transmitted from the disparity information processing unit 228, the stereo-image caption producing unit 224 uses the disparity information. If disparity information that is sequentially updated in the caption display period is also transmitted from the disparity information processing unit 228, the stereo-image caption producing unit 224 uses any of them.

The disparity information to be used is selected on the basis of, for example, the information representing the disparity information (disparity) correspondence level (see "rendering_level" in Fig. 23) that is necessary on the receiver side (decoder side) when displaying captions, the information being included in a data unit of extended display control, as described above. In that case, for example, if the information is "00", it depends on user setting. By using the disparity information that is sequentially updated in the caption display period, the disparity for a left eye and a right eye can be dynamically changed in accordance with change of the content of images.

The video superimposing unit 226 superimposes the data (bitmap data) of captions for a left eye and a right eye produced by the stereo-image caption producing unit 224 on the stereo image data (left-eye image data and right-eye image data) obtained by the video decoder 222, thereby obtaining stereo image data to be displayed Vout. Then, the video superimposing unit 226 outputs the stereo image data to be displayed Vout to the outside of the bit stream processing unit 201.

Also, the audio decoder 227 performs an inverse process of the process performed by the above-described audio encoder 117 of the transmission data generating unit 110. That is, the audio decoder 227 reconstructs an audio elementary stream from the audio packets extracted by the demultiplexer 221, performs a decoding process, and obtains audio data Aout. Then, the audio decoder 227 outputs the audio data Aout to the outside of the bit stream processing unit 201.

The operation of the bit stream processing unit 201 illustrated in Fig. 39 will be briefly described. The bit stream data BSD output from the digital tuner 204 (see Fig. 38) is supplied to the demultiplexer 221. In the demultiplexer 221, packets of video, audio, and captions are extracted from the bit stream data BSD, and are supplied to the respective decoders.

In the video decoder 222, a video elementary stream is reconstructed from the video packets extracted by the demultiplexer 221, furthermore a decoding process is performed, and stereo image data including left-eye image data and right-eye image data is obtained. The stereo image data is supplied to the video superimposing unit 226.

Also, in the caption decoder 223, a caption elementary stream is reconstructed from the caption packets extracted by the demultiplexer 221, furthermore a decoding process is performed, and the pieces of caption data (caption data based on the ARIB method) of the respective caption units are obtained. The pieces of caption data of the respective caption units are supplied to the stereo-image caption producing unit 224.

In the disparity information retrieving unit 225, the disparity vectors (disparity information) corresponding to respective caption units are retrieved from the caption stream obtained through the caption decoder 223. In this case, the disparity vectors of the respective caption units (individual disparity vectors) or a disparity vector common to the individual caption units (common disparity vector) is obtained.

Also, in the disparity information retrieving unit 225, disparity information that is used in common in the caption display period is obtained, or disparity information that is sequentially updated in the caption display period is obtained together with the disparity information that is used in common in the caption display period. The disparity information (disparity vector) retrieved by the disparity information retrieving unit 225 is transmitted to the stereo-image caption producing unit 224 via the disparity information processing unit 228. In the disparity information processing unit 228, the following process is performed on the disparity information that is sequentially updated in the caption display period. That is, in the disparity information processing unit 228, an interpolation process including an LPF process in the time direction (frame direction) is performed, so that disparity information for an optional frame interval in the caption display period, for example, disparity information for one frame interval, is generated, and the disparity information is transmitted to the stereo-image caption producing unit 224.

In the stereo-image caption producing unit 224, the data (bitmap data) of a left-eye caption and a right-eye caption to be superimposed on a left-eye image and a right-eye image is generated on the basis of the pieces of caption data of the respective caption units and the disparity vectors corresponding to the respective caption units. In this case, the superimposition position in the image of the right-eye caption is shifted by the disparity vector in the horizontal direction with respect to the left-eye caption. The data of the left-eye caption and the right-eye caption is supplied to the video superimposing unit 226.

In the video superimposing unit 226, the data (bitmap data) of the left-eye caption and the right-eye caption produced by the stereo-image caption producing unit 224 is superimposed on the stereo image data obtained by the video decoder 222, so that stereo image data to be displayed Vout is obtained. The stereo image data to be displayed Vout is output to the outside of the bit stream processing unit 201.

Also, in the audio decoder 227, an audio elementary stream is reconstructed from the audio packets extracted by the demultiplexer 221, furthermore a decoding process is performed, and audio data Aout corresponding to the above-described stereo image data to be displayed Vout is obtained. The audio data Aout is output to the outside of the bit stream processing unit 201.

As described above, in the set top box 200 illustrated in Fig. 38, a received caption data stream includes the data of captions (caption units) and disparity vectors (disparity information). Also, the disparity vectors (disparity information) are inserted into a data unit for transmitting caption display control information in a PES stream of a caption sentence data group, and the pieces of caption data are associated with the disparity vectors. Thus, in the bit stream processing unit 201, appropriate disparity can be given to a caption unit (caption) that is to be superimposed on a left-eye image and a right-eye image by using a corresponding disparity vector (disparity information). Thus, the perspective consistency with the individual objects in an image can be maintained in an optimum state when displaying the caption unit (caption).

Also, in the set top box 200 illustrated in Fig. 38, the disparity information retrieving unit 225 of the bit stream processing unit 201 obtains disparity information that is used in common in the caption display period, or obtains disparity information that is sequentially updated in the caption display period together with the disparity information that is used in common in the caption display period. In the stereo-image caption producing unit 224, the disparity information that is sequentially updated in the caption display period is used, so that the disparity given to captions for a left eye and a right eye can be dynamically changed in accordance with changes of the content of images.

Also, in the set top box 200 illustrated in Fig. 38, the disparity information processing unit 228 of the bit stream processing unit 201 performs an interpolation process on the disparity information that is sequentially updated in the caption display period, thereby generating disparity information for an optional frame interval in the caption display period. In this case, even if disparity information is transmitted from the transmitter side (broadcast station 100) in each BSP (update frame interval) corresponding to 16 frames, for example, the disparity given to captions for a left eye and a right eye can be controlled at short intervals, for example, in units of frames.

Also, in the set top box 200 illustrated in Fig. 38, the disparity information processing unit 228 of the bit stream processing unit 201 performs an interpolation process including an LPF process in the time direction (frame direction). Thus, even if disparity information is transmitted from the transmitter side (broadcast station 100) in each BSP (update frame interval), the change in the time direction (frame direction) of disparity information after the interpolation process can be made moderate (see Fig. 40). Therefore, unnaturalness caused by discontinuous transition of disparity given to captions for a left eye and a right eye at update frame intervals can be suppressed.

### [Description of television receiver]

Referring back to Fig. 1, the television receiver 300 receives stereo image data that is transmitted from the set top box 200 via the HDMI cable 400. The television receiver 300 includes a 3D signal processing unit 301. The 3D signal processing unit 301 performs a process (decoding process) corresponding to a transmission method on the stereo image data, thereby generating left-eye image data and right-eye image data.

### [Example configuration of television receiver]

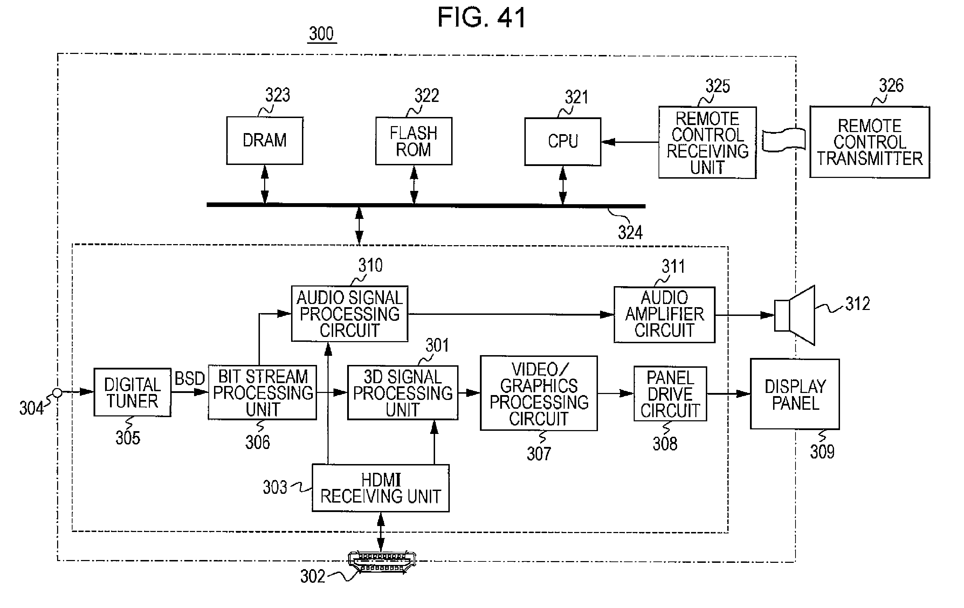

An example configuration of the television receiver 300 will be described. Fig. 41 illustrates an example configuration of the television receiver 300. The television receiver 300 includes the 3D signal processing unit 301, an HDMI terminal 302, an HDMI receiving unit 303, an antenna terminal 304, a digital tuner 305, and a bit stream processing unit 306.

Also, the television receiver 300 includes a video/graphics processing circuit 307, a panel drive circuit 308, a display panel 309, an audio signal processing circuit 310, an audio amplifier circuit 311, and a speaker 312. Also, the television receiver 300 includes a CPU 321, a flash ROM 322, a DRAM 323, an internal bus 324, a remote control receiving unit 325, and a remote control transmitter 326.

The antenna terminal 304 is a terminal for inputting a television broadcast signal that is received by a receiving antenna (not illustrated). The digital tuner 305 processes the television broadcast signal input to the antenna terminal 304, and outputs certain bit stream data (transport stream) BSD corresponding to a channel selected by a user.

The bit stream processing unit 306 is configured similarly to the bit stream processing unit 201 in the set top box 200 illustrated in Fig. 38. The bit stream processing unit 306 extracts stereo image data, audio data, pieces of caption data of caption units, disparity vectors, etc., from the bit stream data BSD. Also, the bit stream processing unit 306 combines the data of a left-eye caption and a right-eye caption with the stereo image data, thereby generating stereo image data to be displayed and outputting it. Also, the bit stream processing unit 306 outputs audio data.

The HDMI receiving unit 303 receives uncompressed image data and audio data that are supplied to the HDMI terminal 302 via the HDMI cable 400 through the communication compatible with HDMI. The version of the HDMI receiving unit 303 is HDMI 1.4a, for example, and is in a state of being able to handle stereo image data.

The 3D signal processing unit 301 performs a decoding process on the stereo image data that is received by the HDMI receiving unit 303 or that is obtained by the bit stream processing unit 306, thereby generating left-eye image data and right-eye image data. In this case, the 3D signal processing unit 301 performs a decoding process corresponding to the transmission method (see Fig. 4) on the stereo image data obtained by the bit stream processing unit 306. Also, the 3D signal processing unit 301 performs a decoding process corresponding to a TMDS transmission data structure on the stereo image data received by the HDMI receiving unit 303.

The video/graphics processing circuit 307 generates image data for displaying a stereo image on the basis of the left-eye image data and right-eye image data generated by the 3D signal processing unit 301. Also, the video/graphics processing circuit 307 performs an image quality adjustment process on the image data as necessary. Also, the video/graphics processing circuit 307 combines the data of superimposition information, such as a menu and a program table, with the image data as necessary. The panel drive circuit 308 drives the display panel 309 on the basis of the image data output from the video/graphics processing circuit 307. The display panel 309 is constituted by a liquid crystal display (LCD), a plasma display panel (PDP), or the like.

The audio signal processing circuit 310 performs a necessary process, such as D/A conversion, on the audio data that is received by the HDMI receiving unit 303 or that is obtained by the bit stream processing unit 306. The audio amplifier circuit 311 amplifies an audio signal output from the audio signal processing circuit 310 and supplies it to the speaker 312.

The CPU 321 controls the operation of the individual units of the television receiver 300. The flash ROM 322 stores control software and stores data. The DRAM 323 forms a work area of the CPU 321. The CPU 321 expands software and data read from the flash ROM 322 on the DRAM 323 and starts the software, and controls the individual units of the television receiver 300.

The remote control receiving unit 325 receives a remote control signal (remote control code) transmitted from the remote control transmitter 326, and supplies it to the CPU 321. The CPU 321 controls the individual units of the television receiver 300 on the basis of this remote control code. The CPU 321, the flash ROM 322, and the DRAM 323 are connected to the internal bus 324.

The operation of the television receiver 300 illustrated in Fig. 41 will be briefly described. The HDMI receiving unit 303 receives stereo image data and audio data that are transmitted from the set top box 200 connected to the HDMI terminal 302 via the HDMI cable 400. The stereo image data received by the HDMI receiving unit 303 is supplied to the 3D signal processing unit 301. Also, the audio data received by the HDMI receiving unit 303 is supplied to the audio signal processing circuit 310.

A television broadcast signal input to the antenna terminal 304 is supplied to the digital tuner 305. The digital tuner 305 processes the television broadcast signal, and outputs certain bit stream data (transport stream) BSD corresponding to a channel selected by a user.

The bit stream data BSD output from the digital tuner 305 is supplied to the bit stream processing unit 306. In the bit stream processing unit 306, stereo image data, audio data, pieces of caption data of caption units, disparity vectors, etc., are extracted from the bit stream data BSD. Also, in the bit stream processing unit 306, the data of a left-eye caption and a right-eye caption is combined with the stereo image data, so that stereo image data to be displayed is generated.

The stereo image data to be displayed that is generated by the bit stream processing unit 306 is supplied to the 3D signal processing unit 301. Also, the audio data obtained by the bit stream processing unit 306 is supplied to the audio signal processing circuit 310.

In the 3D signal processing unit 301, a decoding process is performed on the stereo image data that is received by the HDMI receiving unit 303 or that is obtained by the bit stream processing unit 306, so that left-eye image data and right-eye image data are generated. The left-eye image data and the right-eye image data are supplied to the video/graphics processing circuit 307. In the video/graphics processing circuit 307, image data for displaying a stereo image is generated on the basis of the left-eye image data and the right-eye image data, and an image quality adjustment process and a process of combining superimposition information data are performed as necessary.

The image data obtained by the video/graphics processing circuit 307 is supplied to the panel drive circuit 308. Accordingly, a stereo image is displayed on the display panel 309. For example, left-eye images based on the left-eye image data and right-eye images based on the right-eye image data are alternately displayed on the display panel 309 in a time division manner. A viewer can view only the left-eye images with the left eye and can view only the right-eye images with the right eye by wearing shutter glasses in which a left-eye shutter and a right-eye shutter alternately open in synchronization with display on the display panel 309, thereby being able to perceive stereo images.

Also, in the audio signal processing circuit 310, a necessary process, such as D/A conversion, is performed on the audio data that is received by the HDMI receiving unit 303 or that is obtained by the bit stream processing unit 306. The audio data is amplified by the audio amplifier circuit 311 and is then supplied to the speaker 312. Accordingly, the audio corresponding to an image displayed on the display panel 309 is output from the speaker 312.

### <2. Modification>

In the above-described embodiment, the stereo image display system 10 is constituted by the broadcast station 100, the set top box 200, and the television receiver 300. However, the television receiver 300 is provided with the bit stream processing unit 306 that functions equivalently to the bit stream processing unit 201 in the set top box 200, as illustrated in Fig. 41. Thus, a stereo image display system 10A constituted by the broadcast station 100 and the television receiver 300 is also available, as illustrated in Fig. 42.

Also, in the above-described embodiment, an example in which a data stream (bit stream data) including stereo image data is broadcasted by the broadcast station 100 has been described. However, the present invention can also be applied to a system having a configuration in which this data stream is distributed to a reception terminal using a network, such as the Internet.

Also, in the above-described embodiment, the set top box 200 is connected to the television receiver 300 via a digital interface of HDMI. However, the present invention can also be applied to a case where those are connected via a digital interface (including wireless as well as wired) similar to the digital interface of HDMI.

Also, in the above-described embodiment, caption units (captions) are handled as superimposition information. Alternatively, the present invention can also be applied to other superimposition information, such as graphics information or text information.

### Industrial Applicability

The present invention can be applied to a stereo image system that displays superimposition information such as captions superimposed on an image.

### Reference Signs List

- 10, 10A:: stereo image display system
- 100:: broadcast station
- 110:: transmission data generating unit
- 113:: video encoder
- 117:: audio encoder
- 122:: multiplexer
- 130:: data retrieving unit
- 130a:: data recording medium
- 131:: disparity information creating unit
- 132:: caption producing unit
- 133:: caption encoder
- 200:: set top box (STB)
- 201:: bit stream processing unit
- 202:: HDMI terminal
- 203:: antenna terminal
- 204:: digital tuner
- 205:: video signal processing circuit
- 206:: HDMI transmitting unit
- 207:: audio signal processing circuit
- 211:: CPU
- 215:: remote control receiving unit
- 216:: remote control transmitter
- 221:: demultiplexer
- 222:: video decoder
- 223:: caption decoder
- 224:: stereo-image caption producing unit
- 225:: disparity information retrieving unit
- 226:: video superimposing unit
- 227:: audio decoder
- 228:: disparity information processing unit
- 300:: television receiver (TV)
- 301:: 3D signal processing unit
- 302:: HDMI terminal
- 303:: HDMI receiving unit
- 304:: antenna terminal
- 305:: digital tuner
- 306:: bit stream processing unit
- 307:: video/graphics processing circuit
- 308:: panel drive circuit
- 309:: display panel
- 310:: audio signal processing circuit
- 311:: audio amplifier circuit
- 312:: speaker
- 321:: CPU
- 325:: remote control receiving unit
- 326:: remote control transmitter
- 400:: HDMI cable

## Claims

1. A stereo image data transmitting apparatus comprising:
an image data output unit that outputs stereo image data including left-eye image data and right-eye image data;
a superimposition information data output unit that outputs data of superimposition information that is to be superimposed on images that are based on the left-eye image data and the right-eye image data;
a disparity information output unit that outputs disparity information for giving disparity by shifting the superimposition information that is to be superimposed on the images that are based on the left-eye image data and the right-eye image data; and
a data transmitting unit that transmits a multiplexed data stream including a first data stream and a second data stream, the first data stream including the stereo image data output from the image data output unit, the second data stream including the data of the superimposition information output from the superimposition information data output unit and the disparity information output from the disparity information output unit,
wherein the second data stream includes a data unit for transmitting display control information about the superimposition information, and
wherein the data unit includes the disparity information inserted thereinto.

2. The stereo image data transmitting apparatus according to Claim 1,
wherein the disparity information includes first disparity information or includes the first disparity information and second disparity information, the first disparity information being used in common in a certain number of frame periods in which the superimposition information is displayed, the second disparity information being sequentially updated in the certain number of frame periods, and
wherein the data unit includes flag information inserted thereinto, the flag information indicating existence of the second disparity information.

3. The stereo image data transmitting apparatus according to Claim 2,
wherein the second disparity information includes disparity information about an initial frame in the certain number of frame periods and disparity information about subsequent frames in each of update frame intervals.

4. The stereo image data transmitting apparatus according to Claim 3,
wherein the second disparity information includes flag information added thereto for individual frames in each of the update frame intervals, the flag information indicating whether or not the disparity information is updated.

5. The stereo image data transmitting apparatus according to Claim 3,
wherein the second disparity information includes information added thereto for individual frames in each of the update frame intervals, the information adjusting the update frame intervals.

6. The stereo image data transmitting apparatus according to Claim 3,
wherein the data unit includes information inserted thereinto, the information specifying a frame period.

7. The stereo image data transmitting apparatus according to Claim 1,
wherein the disparity information inserted into the data unit includes disparity information corresponding to specific superimposition information that is to be displayed on the same screen or disparity information corresponding to a plurality of pieces of superimposition information that are to be displayed on the same screen.

8. The stereo image data transmitting apparatus according to Claim 2,
wherein the data unit includes information inserted thereinto, the information being necessary for displaying the superimposition information, the information indicating a correspondence level for the disparity information.

9. The stereo image data transmitting apparatus according to Claim 1,
wherein the second data stream includes, in an upper layer of the data unit, flag information indicating whether the second data stream is compatible with extended display of the superimposition information.

10. The stereo image data transmitting apparatus according to Claim 1,
wherein the multiplexed data stream includes flag information inserted thereinto, the flag information indicating whether the second data stream is compatible with extended display control of the superimposition information.

11. The stereo image data transmitting apparatus according to Claim 10,
wherein the multiplexed data stream includes an event information table serving as service information for performing management in units of events, and
wherein the flag information is inserted into a lower layer of the event information table.

12. The stereo image data transmitting apparatus according to Claim 10,
wherein the multiplexed data stream includes a program map table serving as program specific information that indicates programs to which individual elementary streams included in the multiplexed data stream belong, and
wherein the flag information is inserted into a lower layer of the program map table.

13. The stereo image data transmitting apparatus according to Claim 1,
wherein the data of the superimposition information includes caption sentence data that is based on an ARIB method, and
wherein the data unit includes a data unit in a caption sentence data group.

14. A stereo image data transmitting method comprising:
an image data output step of outputting stereo image data including left-eye image data and right-eye image data;
a superimposition information data output step of outputting data of superimposition information that is to be superimposed on images that are based on the left-eye image data and the right-eye image data;
a disparity information output step of outputting disparity information for giving disparity by shifting the superimposition information that is to be superimposed on the images that are based on the left-eye image data and the right-eye image data; and
a data transmitting step of transmitting a multiplexed data stream including a first data stream and a second data stream, the first data stream including the stereo image data output in the image data output step, the second data stream including the data of the superimposition information output in the superimposition information data output step and the disparity information output in the disparity information output step,
wherein the second data stream includes a data unit for transmitting display control information about the superimposition information, and
wherein the data unit includes the disparity information inserted thereinto.

15. A stereo image data receiving apparatus comprising:
a data receiving unit that receives a multiplexed data stream including a first data stream and a second data stream,
the first data stream including stereo image data including left-eye image data and right-eye image data for displaying a stereo image,
the second data stream including data of superimposition information that is to be superimposed on images that are based on the left-eye image data and the right-eye image data and disparity information for giving disparity by shifting the superimposition information that is to be superimposed on the images that are based on the left-eye image data and the right-eye image data,
the second data stream including a data unit for transmitting display control information about the superimposition information, the disparity information being inserted into the data unit;
an image data obtaining unit that obtains the stereo image data from the first data stream included in the multiplexed data stream received by the data receiving unit;
a superimposition information data obtaining unit that obtains the data of the superimposition information from the second data stream included in the multiplexed data stream received by the data receiving unit;
a disparity information obtaining unit that obtains the disparity information from the second data stream included in the multiplexed data stream received by the data receiving unit; and
an image data processing unit that gives disparity to the same superimposition information that is to be superimposed on a left-eye image and a right-eye image using the left-eye image data and the right-eye image data included in the stereo image data obtained by the image data obtaining unit, the disparity information obtained by the disparity information obtaining unit, and the data of the superimposition information obtained by the superimposition information data obtaining unit, thereby obtaining data of the left-eye image on which the superimposition information is superimposed and data of the right-eye image on which the superimposition information is superimposed.

16. The stereo image data receiving apparatus according to Claim 15,
wherein the disparity information inserted into the data unit is disparity information that is sequentially updated in a certain number of frame periods in which the superimposition information is displayed, and includes disparity information about an initial frame in the certain number of frame periods and disparity information about subsequent frames in each of update frame intervals.

17. The stereo image data receiving apparatus according to Claim 15,
wherein the image data processing unit performs an interpolation process on disparity information about a plurality of frames included in the disparity information that is sequentially updated in the certain number of frame periods, thereby generating and using disparity information for an optional frame interval in the certain number of frame periods.

18. The stereo image data receiving apparatus according to Claim 17,
wherein the interpolation process includes a low-pass filter process in a time direction.

19. A stereo image data receiving method comprising:
a data receiving step of receiving a multiplexed data stream including a first data stream and a second data stream,
the first data stream including stereo image data including left-eye image data and right-eye image data for displaying a stereo image,
the second data stream including data of superimposition information that is to be superimposed on images that are based on the left-eye image data and the right-eye image data and disparity information for giving disparity by shifting the superimposition information that is to be superimposed on the images that are based on the left-eye image data and the right-eye image data,
the second data stream including a data unit for transmitting display control information about the superimposition information, the disparity information being inserted into the data unit;
an image data obtaining step of obtaining the stereo image data from the first data stream included in the multiplexed data stream received in the data receiving step;
a superimposition information data obtaining step of obtaining the data of the superimposition information from the second data stream included in the multiplexed data stream received in the data receiving step;
a disparity information obtaining step of obtaining the disparity information from the second data stream included in the multiplexed data stream received in the data receiving step; and
an image data processing step of giving disparity to the same superimposition information that is to be superimposed on a left-eye image and a right-eye image using the left-eye image data and the right-eye image data included in the stereo image data obtained in the image data obtaining step, the disparity information obtained in the disparity information obtaining step, and the data of the superimposition information obtained in the superimposition information data obtaining step, thereby obtaining data of the left-eye image on which the superimposition information is superimposed and data of the right-eye image on which the superimposition information is superimposed.
